# EUROPÄISCHE PATENTANMELDUNG

(11) **EP 1 975 188 A1**
(43) Veröffentlichungstag der Anmeldung: **01.10.2008**
(21) Anmeldenummer: 07105002.5
(22) Anmeldetag: 27.03.2007
(51) Int. Cl.: C08G 18/12, C08G 18/20, C08G 18/48, C08G 18/75, C09D 175/08, C09J 175/08

(54) **Cycloaliphatische Polyurethanzusammensetzung enthaltend cycloaliphatische Dialdimine**

(71) Anmelder: Sika Technology AG, 6340 Baar (CH)
(72) Erfinder: Burckhardt, Urs, 8049, Zürich (CH)
(74) Vertreter: Sika Patent Attorneys

(57) **Zusammenfassung**

Die vorliegende Erfindung betrifft Polyurethanzusammensetzungen, welche mindestens ein cycloaliphatische Isocyanatgruppen aufweisendes Polyurethanpolymer P und mindestens ein cycloaliphatisches Dialdimin aufweisen.

Derartige Zusammensetzungen eignen sich insbesondere als elastische Kleb- und Dichtstoffe sowie als Beschichtungen und zeichnen sich dadurch aus, dass sie bei guten Verarbeitungseigenschaften lichtbeständig sind und eine gute Lagerstabilität aufweisen. Weiterhin härten die erfindungsgemässen Zusammensetzungen rasch, blasenfrei und geruchlos aus. Sie verfügen im ausgehärteten Zustand über eine hohe Festigkeit und zeigen eine geringe Oberflächenklebrigkeit sowie eine geringe Tendenz zum Ausschwitzen migrationsfähiger Bestandteile.

## Beschreibung

### Technisches Gebiet

Die Erfindung betrifft das Gebiet der Polyurethanzusammensetzungen, welche insbesondere als elastische Klebstoffe, Dichtstoffe und Beschichtungen eingesetzt werden.

### Stand der Technik

Feuchtigkeitshärtende Zusammensetzungen, welche auf Isocyanat-gruppen aufweisenden Polyurethanpolymeren basieren, werden seit geraumer Zeit als elastische Klebstoffe, Dichtstoffe und Beschichtungen eingesetzt. Diese Polyurethanpolymere sind üblicherweise aus Polyolen, insbesondere Polyether- oder Polyesterpolyolen, und Polyisocyanaten aufgebaut. Oft handelt es sich bei den verwendeten Polyisocyanaten um aromatische Polyisocyanate. Solche auf aromatischen Polyisocyanaten aufgebauten Polyurethanpolymere neigen aber dazu, sich unter Licht- und Temperatureinfluss zu verfärben, bzw. zu vergilben. Sie sind deshalb für Anwendungen, wo die Farbstabilität des Produkts von Bedeutung ist, beispielsweise bei in hellen Farbtönen eingefärbten oder transparenten Bodenbelägen oder hellfarbigen Sichtfugen, nicht einsetzbar.

Ausgehend von aliphatischen, insbesondere cycloaliphatischen, Polyisocyanaten sind farbstabile Polyurethanzusammensetzungen zugänglich. Solche cycloaliphatischen Polyurethanzusammensetzungen weisen aber Nachteile auf. Ihre Aushärtungsgeschwindigkeit ist deutlich langsamer und ihre mechanische Festigkeit und Härte im ausgehärteten Zustand ist geringer im Vergleich mit Zusammensetzungen, welche auf aromatischen Polyisocyanten basieren.

Mit dem Einsatz von blockierten Aminen, sogenannten "latenten Härtern", in feuchtigkeitshärtenden Polyurethanzusammensetzungen lässt sich die Geschwindigkeit der Aushärtung erhöhen und zudem die Bildung von Blasen unterdrücken. Solche latenten Härter, wie beispielsweise Polyoxazolidine, Polyketimine oder Polyaldimine, bringen jedoch meist den Nachteil mit sich, bei der Aushärtung flüchtige und geruchsintensive Abspaltungsprodukte, insbesondere Aldehyde oder Ketone, freizusetzen und/oder die Lagerstabilität der Zusammensetzung herabzusetzen. Während US 4,469,831 eine feuchtigkeitshärtende einkomponentige Polyurethanzusammensetzung beschreibt, welche eine teilweise höhere Lagerstabilität aufweist, bleibt der grosse Nachteil, dass der abgespaltene Aldehyd einen starken, deutlich wahrnehmbaren Geruch besitzt.

In WO 2004/013200 A1 sind feuchtigkeitshärtende Polyurethanzusammensetzungen enthaltend spezielle geruchsfreie Polyaldimine offenbart, welche lagerstabil sind und ohne Geruchsbildung blasenfrei aushärten. Diese Polyaldimine setzen bei der Aushärtungsreaktion als Abspaltungsprodukt einen nichtflüchtigen Aldehyd frei, der in der ausgehärteten Zusammensetzung verbleibt und dort einen weichmachenden Einfluss ausübt. Ausgehend von den in WO 2004/013200 offenbarten Polyaldiminen sind zwar feuchtigkeitshärtende Polyurethanzusammensetzungen basierend auf aliphatischen Polyisocyanaten mit einer höheren Aushärtungsgeschwindigkeit zugänglich. Das Problem der eher geringen mechanischen Festigkeit und Härte solcher vergilbungsfreier Polyurethanzusammensetzungen ist jedoch nicht gelöst.

### Darstellung der Erfindung

Aufgabe der vorliegenden Erfindung ist es daher, eine im ausgehärteten Zustand vergilbungsfreie Polyurethanzusammensetzung zur Verfügung zu stellen, welche schnell aushärtet und über eine hohe Härte und Festigkeit verfügt, und zudem eine gute Lagerstabilität aufweist, gut zu verarbeiten ist und ohne intensive Geruchsbildung blasenfrei aushärtet.

Überraschenderweise wurde nun gefunden, dass eine Zusammensetzung nach Anspruch 1 die gewünschten Eigenschaften aufweist. Diese Zusammensetzung beruht auf einer Kombination von cycloaliphatische Isocyanatgruppen aufweisenden Polyurethanpolymeren und Dialdiminen ausgehend von cycloaliphatischen Diaminen.

Die Zusammensetzung nach Anspruch 1 härtet rasch aus und verliert dabei weitgehend ihre Oberflächenklebrigkeit. Nach ihrer Aushärtung zeigt die Zusammensetzung eine unerwartet hohe Härte und Festigkeit, wie sie aufgrund der im Stand der Technik beschriebenen Zusammensetzungen nicht erwartet werden konnten. Sie eignet sich dadurch hervorragend als Beschichtung, insbesondere als Bodenbelag, sowie als Klebstoff oder Dichtstoff.

Weiterhin hat sich überraschenderweise herausgestellt, dass die Zusammensetzung nach Anspruch 1 eine deutlich geringere Tendenz zeigt, nicht im Polymer eingebundene flüssige Bestandteile, insbesondere die zur Herstellung der cycloaliphatischen Dialdimine eingesetzten Aldehyde sowie optional vorhandene Weichmacher, durch Migration auszuschwitzen, als dies bei vergleichbaren Zusammensetzungen nach dem Stand der Technik, welche nicht-cycloaliphatische Dialdimine oder keine Dialdimine enthalten, der Fall ist. Dadurch neigt eine Zusammensetzung nach Anspruch 1 weniger stark dazu, nach ihrer Applikation, beispielsweise als Fugendichtstoff, an der Oberfläche durch anhaftende Verunreinigungen, insbesondere Stäube, zu verschmutzen oder Flecken auf den Substraten zu hinterlassen.

Die Zusammensetzung ist weiterhin lagerstabil, härtet ohne starke Geruchsbildung blasenfrei aus und neigt unter Licht- und Temperatureinfluss nicht zu Vergilbung.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der vorliegenden Erfindung sind in einem ersten Aspekt Zusammensetzungen umfassend mindestens ein Polyurethanpolymer P, welches cycloaliphatische Isocyanatgruppen aufweist, und mindestens ein cycloaliphatisches Dialdimin der Formel (I).

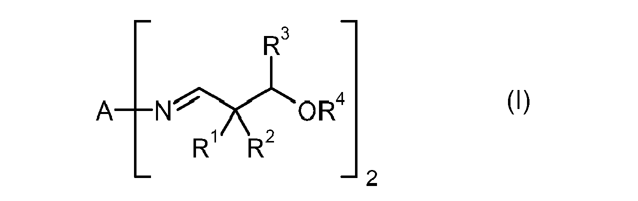

Die Reste R¹ und R² stehen unabhängig voneinander jeweils für einen einwertigen Kohlenwasserstoffrest mit 1 bis 12 C-Atomen oder zusammen für einen zweiwertigen Kohlenwasserstoffrest mit 4 bis 20 C-Atomen, welcher Teil eines, gegebenenfalls substituierten, carbocyclischen Rings mit 5 bis 8, bevorzugt mit 6, C-Atomen ist. Bevorzugt stehen R¹ und R² für Methylgruppen.

Der Rest R³ steht für ein Wasserstoffatom oder für eine Alkyl- oder Arylalkylgruppe, insbesondere für ein Wasserstoffatom.

Der Rest R⁴ steht für einen, gegebenenfalls Heteroatome enthaltenden, Kohlenwasserstoffrest mit 6 bis 30 C-Atomen oder für einen Rest der Formel (II).

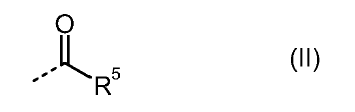

Hierbei steht der Rest R⁵ entweder für einen linearen oder verzweigten Alkylrest mit 6 bis 30 C-Atomen, gegebenenfalls mit cyclischen Anteilen und gegebenenfalls mit mindestens einem Heteroatom, insbesondere Sauerstoff in Form von Ether-, Ester- oder Aldehydgruppen, oder für einen einfach oder mehrfach ungesättigten linearen oder verzweigten Kohlenwasserstoffrest mit 6 bis 30 C-Atomen, oder für einen, gegebenenfalls substituierten, aromatischen oder heteroaromatischen 5- oder 6-gliedrigen Ring. Bevorzugt steht R⁴ für einen Rest der Formel (II), wobei R⁵ insbesondere für eine Alkylgruppe mit 11 bis 30 C-Atomen, bevorzugt mit 11 C-Atomen, steht.

Meist bevorzugt sind cycloaliphatische Dialdimine der Formel (I), bei denen R¹ und R² für Methylgruppen stehen, R³ für ein Wasserstoffatom steht und R⁴ für einen Rest der Formel (II) steht, wobei R⁵ für eine Alkylgruppe mit 11 bis 30 C-Atomen, insbesondere mit 11 C-Atomen, steht.

Weiterhin steht A im cycloaliphatischen Dialdimin der Formel (I) für den Rest eines cycloaliphatischen primären Diamins nach Entfernung der beiden primären Aminogruppen, wobei dieser Rest keine Gruppierungen aufweist, welche mit Isocyanatgruppen reaktionsfähig sind.

Insbesondere enthält A keine Hydroxylgruppen, keine primären oder sekundären Aminogruppen, keine Mercaptogruppen, keine Harnstoffgruppen und keine anderen Gruppen mit aktivem Wasserstoff.

Mit "Poly" beginnende Substanznamen wie Polyol oder Polyisocyanat bezeichnen im vorliegenden Dokument Substanzen, die formal zwei oder mehr der in ihrem Namen vorkommenden funktionellen Gruppen pro Molekül enthalten.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst weiterhin auch so genannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem so genannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Der Begriff "cycloaliphatisches primäres Diamin" bezeichnet hier und im Folgenden ein Diamin, welches zwei primäre Aminogruppen aufweist, die an einen Kohlenwasserstoffrest gebunden sind, welcher cycloaliphatisch ist oder cycloaliphatische Anteile aufweist.

Der Begriff "aktiver Wasserstoff" bezeichnet im vorliegenden Dokument ein deprotonierbares, an ein Stickstoff-, Sauerstoff- oder Schwefelatom gebundenes Wasserstoffatom.

Das cycloaliphatische Dialdimin der Formel (I) lässt sich durch eine Kondensationsreaktion zwischen mindestens einem cycloaliphatischen primären Diamin der Formel H₂N-A-NH₂ und mindestens einem Aldehyd der Formel (III) herstellen.

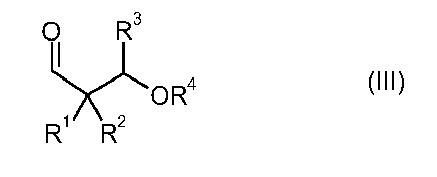

Als cycloaliphatische primäre Diamine der Formel H₂N-A-NH₂ eignen sich beispielsweise 1,3- und 1,4-Bis-(aminomethyl)cyclohexan, 1-Cyclo-hexylamino-3-aminopropan, 2,5(2,6)-Bis-(aminomethyl)-bicyclo[2.2.1]heptan (NBDA, hergestellt von Mitsui Chemicals), 3(4),8(9)-Bis-(aminomethyl)-tricyclo-[5.2.1.0^{2,6}]decan oder 3,9-Bis-(3-aminopropyl)-2,4,8,10-tetraoxaspiro[5.5]-undecan.

Als cycloaliphatische primäre Diamine der Formel H₂N-A-NH₂ bevorzugt sind solche, in welchen mindestens eine der Aminogruppen direkt an einen cycloaliphatischen Ring gebunden ist. Solche bevorzugte cycloaliphatische primäre Diamine sind insbesondere ausgewählt aus der Gruppe bestehend aus 1,2-Diaminocyclohexan (DCH), 1,3-Diaminocyclohexan, 1,4-Diaminocyclohexan, Bis-(4-aminocyclohexyl)-methan (H₁₂MDA), Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (IPDA), 2,2'-, 2,4'- und 4,4'-Diaminobicyclohexyl, 2- und 4-Methyl-1,3-diaminocyclohexan und 1,4-Diamino-2,2,6-trimethylcyclohexan. Bevorzugt sind DCH, 1,3-Diaminocyclohexan, 1,4-Diaminocyclohexan, IPDA, H₁₂MDA und Bis-(4-amino-3-methylcyclohexyl)-methan. Meist bevorzugt sind IPDA und H₁₂MDA.

Zur Herstellung eines cycloaliphatischen Dialdimins der Formel (I) werden typischerweise Aldehyde der Formel (III) verwendet. Diese Aldehyde haben die Eigenschaft, dass ihre Reste R¹, R², R³ und R⁴ keine Gruppierungen aufweisen, die mit Isocyanatgruppen reaktionsfähig sind. Insbesondere weisen R¹, R², R³ und R⁴ keine Hydroxylgruppen, keine primären oder sekundäre Aminogruppen, keine Mercaptogruppen, keine Harnstoffgruppen oder keine anderen Gruppen mit aktivem Wasserstoff auf.

Geeignete Aldehyde der Formel (111) sind in einer ersten Ausführungsform Aldehyde, welche als Rest R⁴ einen, gegebenenfalls Heteroatome enthaltenden, Kohlenwasserstoffrest mit 6 bis 30 C-Atomen tragen. Sie stellen Ether von aliphatischen, arylaliphatischen oder cycloaliphatischen 2,2-disubstituierten 3-Hydroxyaldehyden mit Phenolen oder Alkoholen, beispielsweise Fettalkoholen, dar. Geeignete 2,2-disubstituierte 3-Hydroxyaldehyde sind ihrerseits erhältlich aus Aldol-Reaktionen, insbesondere gekreuzten Aldol-Reaktionen, zwischen primären oder sekundären aliphatischen Aldehyden, insbesondere Formaldehyd, und sekundären aliphatischen, sekundären arylaliphatischen oder sekundären cycloaliphatischen Aldehyden, wie beispielsweise Isobutyraldehyd, 2-Methylbutyraldehyd, 2-Ethylbutyraldehyd, 2-Methylvaleraldehyd, 2-Ethylcapronaldehyd, Cyclopentancarboxaldehyd, Cyclohexancarboxaldehyd, 1,2,3,6-Tetrahydrobenzaldehyd, 2-Methyl-3-phenylpropionaldehyd, 2-Phenylpropionaldehyd (Hydratropaldehyd) oder Diphenylacetaldehyd. Insbesondere geeignete Aldehyde sind 2,2-Dimethyl-3-lauroxy-propanal und 2,2-Dimethyl-3-stearoxy-propanal.

In einer zweiten, bevorzugten Ausführungsform sind geeignete Aldehyde der Formel (III) Verbindungen der Formel (IV), 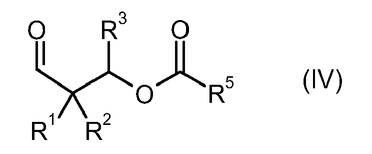 wobei R¹, R², R³ und R⁵ die bereits genannten Bedeutungen aufweisen.

Verbindungen der Formel (IV) sind Ester, welche insbesondere hergestellt werden aus der Reaktion der bereits beschriebenen 2,2-disubstituierten 3-Hydroxyaldehyde, wie beispielsweise 2,2-Dimethyl-3-hydroxypropanal, 2-Hydroxymethyl-2-methyl-butanal, 2-Hydroxymethyl-2-ethyl-butanal, 2-Hydroxymethyl-2-methyl-pentanal, 2-Hydroxymethyl-2-ethyl-hexanal, 1-Hydroxymethyl-cyclopentancarboxaldehyd, 1-Hydroxymethyl-cyclohexancarboxaldehyd 1-Hydroxymethyl-cyclohex-3-encarboxaldehyd, 2-Hydroxymethyl-2-methyl-3-phenyl-propanal, 3-Hydroxy-2-methyl-2-phenyl-propanal und 3-Hyd-roxy-2,2-diphenyl-propanal, mit geeigneten Carbonsäuren.

Beispiele für geeignete Carbonsäuren sind gesättigte aliphatische Carbonsäuren, wie 2-Ethylcapronsäure, Oenanthsäure, Caprylsäure, Pelargonsäure, Caprinsäure, Undecansäure, Laurinsäure, Tridecansäure, Myristinsäure, Pentadecansäure, Palmitinsäure, Margarinsäure, Stearinsäure, Nonadecansäure, Arachinsäure; einfach ungesättigte aliphatische Carbonsäuren wie Palmitoleinsäure, Ölsäure, Erucasäure; mehrfach ungesättigte aliphatische Carbonsäuren wie Linolsäure, Linolensäure, Elaeostearinsäure, Arachidonsäure; cycloaliphatische Carbonsäuren wie Cyclohexancarbonsäure; arylaliphatische Carbonsäuren wie Phenylessigsäure; aromatische Carbonsäuren wie Benzoesäure, Naphthoesäure, Toluylsäure, Anissäure; Isomere dieser Säuren; Fettsäuregemische aus der technischen Verseifung von natürlichen Ölen und Fetten wie beispielsweise Rapsöl, Sonnenblumenöl, Leinöl, Ölbaumöl, Kokosnussöl, Ölpalmkernöl und Ölpalmöl; sowie Dicarbonsäuremonoalkyl- und -arylester, wie sie aus der einfachen Veresterung von Dicarbonsäuren wie Bernsteinsäure, Glutarsäure, Adipinsäure, Pimelinsäure, Korksäure, Azelainsäure, Sebacinsäure, 1,12-Dodecandisäure, Maleinsäure, Fumarsäure, Hexahydrophthalsäure, Hexahydroisophthalsäure, Hexahydroterephthalsäure, 3,6,9-Trioxaundecandisäure und ähnliche Derivate von Polyethylenglykol, mit Alkoholen wie Methanol, Ethanol, Propanol, Butanol, höheren Homologen und Isomeren dieser Alkohole erhalten werden.

Bevorzugte Aldehyde der Formel (IV) sind 3-Benzoyloxy-2,2-di-methylpropanal, 3-Cyclohexanoyloxy-2,2-dimethylpropanal, 2,2-Dimethyl-3-(2-ethylhexyloxy)-propanal, 2,2-Dimethyl-3-lauroyloxy-propanal, 2,2-Dimethyl-3-myristoyloxypropanal, 2,2-Dimethyl-3-palmitoyloxy-propanal, 2,2-Dimethyl-3-stearoyloxy-propanal sowie analoge Ester anderer 2,2-disubstituierter 3-Hydroxyaldehyde.

In einer besonders bevorzugten Ausführungsform steht R⁴ für einen Rest der Formel (II), wobei R⁵ ausgewählt ist aus der Gruppe bestehend aus Phenyl, Cyclohexyl, 2-Ethylhexyl und den C₁₁-, C₁₃-, C₁₅- und C₁₇-Alkylgruppen.

Besonders bevorzugt ist 2,2-Dimethyl-3-lauroyloxypropanal.

In einer bevorzugten Herstellmethode eines Aldehyds der Formel (IV) wird ein 2,2-disubstituierter 3-Hydroxyaldehyd, beispielsweise 2,2-Dimethyl-3-hydroxypropanal, welcher beispielsweise aus Formaldehyd (oder Paraformaldehyd) und Isobutyraldehyd, gegebenenfalls in situ, hergestellt werden kann, mit einer Carbonsäure zum entsprechenden Ester umgesetzt. Diese Veresterung kann ohne die Verwendung von Lösungsmitteln nach bekannten Methoden erfolgen. Diese sind beispielsweise beschrieben in Houben-Weyl, "Methoden der organischen Chemie", Vol. VIII, Seiten 516 - 528.

Zur Herstellung eines Aldehyds der Formel (IV), dessen Rest R⁵ mindestens ein Heteroatom, insbesondere Sauerstoff in Form von Ether-, Ester- oder Aldehydgruppen, aufweist, wird der 2,2-disubstituierte 3-Hydroxyaldehyd entweder mit einer Carbonsäure, welche die entsprechenden funktionellen Gruppen enthält, oder mit einer Dicarbonsäure umgesetzt. So wird beispielsweise aus der Veresterung zweier 2,2-disubstituierter 3-Hydroxyaldehyde mit einer aliphatischen oder cycloaliphatischen Dicarbonsäure, wie beispielsweise Bernsteinsäure, Glutarsäure, Adipinsäure, Azelainsäure, Sebacinsäure oder Cyclohexandisäure, der entsprechende aliphatische oder cycloaliphatische Dialdehyd der Formel (V) erhalten, 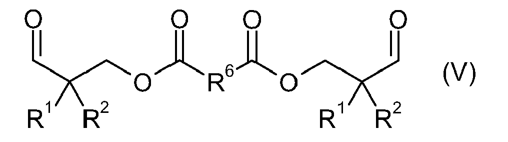 wobei R⁶ für den Kohlenwasserstoffrest der Dicarbonsäure steht.

In einer besonders bevorzugten Ausführungsform sind die Aldehyde der Formel (III) geruchsfrei. Unter einer "geruchsfreien" Substanz wird eine Substanz verstanden, die so geruchsarm ist, dass sie für die meisten menschlichen Individuen nicht riechbar, das heisst mit der Nase nicht wahrnehmbar, ist.

Geruchsfreie Aldehyde der Formel (III) sind einerseits Aldehyde der Formel (III), welche als Rest R⁴ einen, gegebenenfalls Heteroatome enthaltenden, Kohlenwasserstoffrest mit 11 bis 30 C-Atomen tragen; und andererseits Aldehyde der Formel (IV), welche als Rest R⁵ entweder einen linearen oder verzweigten Alkylrest mit 11 bis 30 C-Atomen, gegebenenfalls mit cyclischen Anteilen und gegebenenfalls mit mindestens einem Heteroatom, insbesondere Sauerstoff in Form von Ether-, Ester- oder Aldehydgruppen, oder für einen einfach oder mehrfach ungesättigten linearen oder verzweigten Kohlenwasserstoffrest mit 11 bis 30 C-Atomen aufweisen.

Beispiele für solche geruchsfreien Aldehyde sind Veresterungsprodukte aus den bereits genannten 2,2-disubstituierten 3-Hydroxyaldehyden mit Carbonsäuren wie beispielsweise Laurinsäure, Tridecansäure, Myristinsäure, Pentadecansäure, Palmitinsäure, Margarinsäure, Stearinsäure, Nonadecansäure, Arachinsäure, Palmitoleinsäure, Ölsäure, Erucasäure, Linolsäure, Linolensäure, Elaeostearinsäure, Arachidonsäure, Fettsäuren aus der technischen Verseifung von natürlichen Ölen und Fetten, wie beispielsweise Rapsöl, Sonnenblumenöl, Leinöl, Ölbaumöl, Kokosnussöl, Ölpalmkernöl und Ölpalmöl, sowie technische Gemische von Fettsäuren, welche diese Säuren enthalten. Bevorzugte geruchsfreie Aldehyde der Formel (IV) sind 2,2-Dimethyl-3-lauroyloxypropanal, 2,2-Dimethyl-3-myristoyloxy-propanal, 2,2-Dimethyl-3-palmitoyloxypropanal und 2,2-Dimethyl-3-stearoyl-oxypropanal. Besonders bevorzugt ist 2,2-Dimethyl-3-lauroyloxypropanal.

Als cycloaliphatisches Dialdimin der Formel (I) können auch Mischungen verschiedener cycloaliphatischer Dialdimine verwendet werden, insbesondere auch Mischungen verschiedener Dialdimine aus verschiedenen cycloaliphatischen primären Diaminen der Formel H₂N-A-NH₂ und verschiedenen oder gleichen Aldehyden der Formel (III) oder (IV).

Die cycloaliphatischen Dialdimine der Formel (1) haben die Eigenschaft, dass sie keine tautomeren Enamine bilden können, da sie in a-Stellung zum C-Atom der Aldiminogruppe keinen Wasserstoff als Substituenten tragen. Solche Aldimine bilden zusammen mit Polyurethanpolymeren **P** lagerfähige Gemische, auch wenn hochreaktive Isocyanatgruppen darin vorhanden sind.

Des Weiteren haben die cycloaliphatischen Dialdimine der Formel (I) die Eigenschaft, dass sie geruchsarm oder geruchsfrei sind, und dass auch der bei ihrer Herstellung verwendete Aldehyd der Formel (III) oder (IV) geruchsarm oder geruchsfrei ist.

Bei der Aushärtung der Zusammensetzung wird als Abspaltungsprodukt der zur Herstellung des cycloaliphatischen Dialdimins der Formel (I) verwendete Aldehyd, das heisst ein Aldehyd der Formel (III) oder (IV), freigesetzt. Dadurch, dass die cycloaliphatischen Dialdimine der Formel (I) und diese Aldehyde geruchsarm oder geruchsfrei sind, sind Zusammensetzungen erhältlich, welche ohne starke Geruchsbildung aushärten. Werden zur Herstellung der cycloaliphatischen Dialdimine der Formel (I) ausschliesslich die beschriebenen geruchsfreien Ausführungsformen dieser Aldehyde verwendet, so sind geruchsfrei aushärtende Zusammensetzungen erhältlich.

Das Polyurethanpolymer **P** wird typischerweise hergestellt aus mindestens einem Polyol und mindestens einem cycloaliphatischen Diisocyanat.

Als Polyole für die Herstellung eines Polyurethanpolymers P können beispielsweise die folgenden handelsüblichen Polyole oder Mischungen davon eingesetzt werden:
- Polyetherpolyole, auch Polyoxyalkylenpolyole oder Oligoetherole genannt, welche Polymerisationsprodukte von Ethylenoxid, 1,2-Propylenoxid, 1,2- oder 2,3-Butylenoxid, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der genannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von so genannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.
   Besonders geeignet sind Polyoxyethylenpolyole und Polyoxypropylenpolyole, insbesondere Polyoxyethylendiole, Polyoxypropylendiole, Polyoxyethylentriole und Polyoxypropylentriole.
   Insbesondere geeignet sind Polyoxyalkylendiole oder Polyoxyalkylentriole mit einem Ungesättigtheitsgrad tiefer als 0.02 mEq/g und mit einem Molekulargewicht im Bereich von 1'000 bis 30'000 g/mol, sowie Polyoxyethylendiole, Polyoxyethylentriole, Polyoxypropylendiole und Polyoxypropylentriole mit einem Molekulargewicht von 400 bis 8'000 g/mol. Unter "Molekulargewicht" oder "Molgewicht" versteht man im vorliegenden Dokument stets das Molekulargewichtsmittel Mₙ.
   Ebenfalls besonders geeignet sind so genannte Ethylenoxidterminierte ("EO-endcapped", ethylene oxide-endcapped) Polyoxypropylenpolyole. Letztere sind spezielle Polyoxypropylenpolyoxyethylenpolyole, die beispielsweise dadurch erhalten werden, dass reine Polyoxypropylenpolyole, insbesondere Polyoxypropylendiole und -triole, nach Abschluss der Polypropoxylierungsreaktion mit Ethylenoxid weiter alkoxyliert werden und dadurch primäre Hydroxylgruppen aufweisen. Bevorzugt sind in diesem Fall Polyoxypropylenpolyoxyethylendiole und Polyoxypropylenpolyoxyethylentriole.
- Styrol-Acrylnitril- oder Acrylnitril-Methylmethacrylat-gepfropfte Polyetherpolyole.
- Polyesterpolyole, auch Oligoesterole genannt, hergestellt beispielsweise aus zwei- bis dreiwertigen Alkoholen wie beispielsweise 1,2-Ethandiol, Diethylenglykol, 1,2-Propandiol, Dipropylenglykol, 1,4-Butandiol, 1,5-Pentandiol, 1,6-Hexandiol, Neopentylglykol, Glycerin, 1,1,1-Trimethylolpropan oder Mischungen der vorgenannten Alkohole mit organischen Dicarbonsäuren oder deren Anhydride oder Ester wie beispielsweise Bernsteinsäure, Glutarsäure, Adipinsäure, Korksäure, Azelainsäure, Sebacinsäure, Dodecandicarbonsäure, Maleinsäure, Fumarsäure, Phthalsäure, Isophthalsäure, Terephthalsäure und Hexahydrophthalsäure oder Mischungen der vorgenannten Säuren, sowie Polyesterpolyole aus Lactonen wie beispielsweise ε-Caprolacton.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Polyacrylat- und Polymethacrylatpolyole.
- Polykohlenwasserstoffpolyole, auch Oligohydrocarbonole genannt, wie beispielsweise polyhydroxyfunktionelle Ethylen-Propylen-, Ethylen-Butylen- oder Ethylen-Propylen-Dien-Copolymere, wie sie beispielsweise von der Firma Kraton Polymers hergestellt werden, oder polyhydroxyfunktionelle Copolymere aus Dienen wie 1,3-Butandien oder Diengemischen und Vinylmonomeren wie Styrol, Acrylnitril oder Isobutylen, oder polyhydroxyfunktionelle Polybutadienpolyole, wie beispielsweise solche, die durch Copolymerisation von 1,3-Butadien und Allylalkohol hergestellt werden und auch hydriert sein können.
- Polyhydroxyfunktionelle Acrylonitril/Butadien-Copolymere, wie sie beispielsweise aus Epoxiden oder Aminoalkoholen und carboxylterminierten Acrylonitril/Butadien-Copolymeren (kommerziell erhältlich unter dem Namen Hycar^{®} CTBN von Noveon) hergestellt werden können.

Diese genannten Polyole weisen bevorzugt ein mittleres Molekulargewicht von 250 - 30'000 g/mol, insbesondere von 1'000 - 30'000 g/mol, und weisen bevorzugt eine mittlere OH-Funktionalität im Bereich von 1.6 bis 3 auf.

Besonders geeignete Polyole sind Polyesterpolyole und Polyetherpolyole, insbesondere Polyoxyethylenpolyol, Polyoxypropylenpolyol und Polyoxypropylenpolyoxyethylenpolyol, bevorzugt Polyoxyethylendiol, Polyoxypropylendiol, Polyoxyethylentriol, Polyoxypropylentriol, Polyoxypropylenpolyoxyethylendiol und Polyoxypropylenpolyoxyethylentriol.

Zusätzlich zu diesen genannten Polyolen können kleine Mengen von niedrigmolekularen zwei- oder mehrwertigen Alkoholen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, hydriertes Bisphenol A, dimere Fettalkohole, 1,1,1-Trimethylolethan, 1,1,1-Trimethylolpropan, Glycerin, Pentaerythrit, Zuckeralkohole wie Xylit, Sorbit oder Mannit, Zucker wie Saccharose, andere höherwertige Alkohole, niedrigmolekulare Alkoxylierungsprodukte der vorgenannten zwei- und mehrwertigen Alkohole, sowie Mischungen der vorgenannten Alkohole bei der Herstellung des Polyurethanpolymers **P** mitverwendet werden.

Als cycloaliphatische Diisocyanate zur Herstellung des Polyurethanpolymers **P** können handelsübliche cycloaliphatische Diisocyanate verwendet werden, welche insbesondere ausgewählt sind aus der Gruppe bestehend aus Cyclohexan-1,3-diisocyanat, Cyclohexan-1,4-düsocyanat, 1-Isocyanato-3,3,5-trimethyl-5-isocyanatomethyl-cyclohexan (IPDI), Perhydro-2,4`-diphenylmethandüsocyanat, Perhydro-4,4'-diphenylmethandiisocyanat, 1,4-Diisocyanato-2,2,6-trimethylcyclohexan, 2-Methyl-1,3-düsocyanatocyclohexan und 4-Methyl-1,3-diisocyanatocyclohexan, insbesondere IPDI, Perhydro-2,4'-diphenylmethandiisocyanat und Perhydro-4,4`-diphenylmethandiisocyanat, bevorzugt IPDI.

Weiterhin können Mischungen von Polyurethanpolymeren **P**, insbesondere Mischungen von einem bei Raumtemperatur flüssigen Polyurethanpolymer P mit einem bei Raumtemperatur festen Polyurethanpolymer **P**, eingesetzt werden.

Der Anteil des Polyurethanpolymers **P**, welches cycloaliphatische Isocyanatgruppen aufweist, beträgt vorzugsweise 10 bis 95 Gew.-%, insbesondere 15 bis 80 Gew.-%, bezogen auf die gesamte Zusammensetzung.

Der Anteil des cycloaliphatischen Dialdimins der Formel (I) ist vorzugsweise derart, dass das Verhältnis zwischen den Aldiminogruppen und den Isocyanatgruppen des Polyurethanpolymers **P** einen Wert von 0.1 bis 1.1, insbesondere 0.15 bis 1.0, bevorzugt 0.2 bis 0.9, beträgt.

Vorzugsweise weist die Zusammensetzung weiterhin einen Füllstoff auf. Der Füllstoff beeinflusst sowohl die rheologischen Eigenschaften der nicht ausgehärteten Zusammensetzung als auch die mechanischen Eigenschaften und die Oberflächenbeschaffenheit der ausgehärteten Zusammensetzung. Geeignete Füllstoffe sind anorganische und organische Füllstoffe, zum Beispiel natürliche, gemahlene oder gefällte Calciumcarbonate, welche gegebenenfalls mit Fettsäuren, insbesondere Stearaten, beschichtet sind, Bariumsulfat (BaSO₄, auch Baryt oder Schwerspat genannt), calcinierte Kaoline, Quarzmehl, Aluminiumoxide, Aluminiumhydroxide, Kieselsäuren, insbesondere hochdisperse Kieselsäuren aus Pyrolyseprozessen, Russe, insbesondere industriell hergestellter Russ (Carbon Black; im Folgenden als "Russ" bezeichnet), PVC-Pulver oder Hohlkugeln. Bevorzugte Füllstoffe sind Bariumsulfat und Calciumcarbonate, Russ sowie flammhemmende Füllstoffe wie Hydroxide oder Hydrate, insbesondere Hydroxide oder Hydrate von Aluminium, bevorzugt Aluminiumhydroxid.

Es ist durchaus möglich und kann sogar von Vorteil sein, eine Mischung verschiedener Füllstoffe einzusetzen.

Eine geeignete Menge Füllstoff liegt beispielsweise im Bereich von 10 bis 70 Gew.-%, bevorzugt 20 bis 60 Gew.-%, bezogen auf die gesamte Zusammensetzung.

Die Zusammensetzung kann ein Lösungsmittel enthalten, oder auch nicht. Enthält die Zusammensetzung ein Lösungsmittel, ist darauf zu achten, dass dieses Lösungsmittel keine mit Isocyanatgruppen reaktive Gruppen aufweist, insbesondere keine Hydroxylgruppen und keine anderen Gruppen mit aktivem Wasserstoff.

Geeignete Lösungsmittel sind insbesondere ausgewählt aus der Gruppe bestehend aus Ketonen wie Aceton, Methylethylketon, Diisobutylketon, Acetylaceton, Mesityloxid, Cyclohexanon und Methylcyclohexanon; Ester, beispielsweise Acetate wie Ethylacetat, Propylacetat und Butylacetat, Formiate, Propionate und Malonate wie Diethylmalonat; Ether wie Dialkylether, Ketonether und Esterether, beispielsweise Diisopropylether, Diethylether, Dibutylether, Diethylenglykoldiethylether und Ethylenglykoldiethylether; aliphatische und aromatische Kohlenwasserstoffe wie Toluol, Xylol, Heptan, Octan und Erdölfraktionen wie Naphtha, White Spirit, Petrolether und Benzin; halogenierte Kohlenwasserstoffe wie Methylenchlorid; sowie N-alkylierte Lactame, wie beispielsweise N-Methylpyrrolidon.

Bevorzugt sind Xylol, Toluol, White Spirit und Erdölfraktionen im Siedebereich von 100 °C bis 200 °C.

Geeignete Mengen Lösungsmittel liegen typischerweise im Bereich von 1 bis 50 Gew.-%, insbesondere 1 bis 25 Gew.-%, bezogen auf die gesamte Zusammensetzung.

In der Zusammensetzung können weitere Bestandteile vorhanden sein. Weitere Bestandteile sind insbesondere Hilfs- und Zusatzstoffe wie:
- Weichmacher, beispielsweise Ester organischer Carbonsäuren oder deren Anhydride, zum Beispiel Phthalate wie Dioctylphthalat, Diisononylphthalat oder Diisodecylphthalat, Adipate wie Dioctyladipat, Azelate und Sebacate; organische Phosphor- und Sulfonsäureester, Polybutene und Polyisobutene;
- Katalysatoren, wie sie in der Polyurethanchemie üblich sind, insbesondere Zinn- und Wismutverbindungen, tertiäre Amine, organische Carbon- und Sulfonsäuren;
- Fasern, beispielsweise aus Polyethylen;
- Pigmente, beispielsweise Titandioxid oder Eisenoxide;
- Rheologie-Modifizierer wie beispielsweise Verdickungsmittel oder Thixotropierungsmittel, zum Beispiel Harnstoffverbindungen, Polyamidwachse, Bentonite oder pyrogene Kieselsäuren;
- Reaktivverdünner oder Vernetzer, beispielsweise niedrigmolekulare Oligomere und Derivate von Diisocyanaten wie MDI, PMDI, TDI, HDI, 1,12-Dodecamethylendüsocyanat, Cyclohexan-1,3-diisocyanat oder Cyclohexan-1,4-diisocyanat, IPDI, Perhydro-2,4'-diphenylmethandiisocyanat und Perhydro-4,4`-diphenylmethandüsocyanat, 1,3- und 1,4-Tetramethylxylylendiisocyanat, insbesondere Isocyanurate, Carbodiimide, Uretonimine, Biurete, Allophanate und Iminooxadiazindione der genannten Diisocyanate, Addukte von Diisocyanaten mit kurzkettigen Polyolen, Adipinsäuredihydrazid und andere Dihydrazide, sowie blockierte Amine in Form von Polyaldiminen, Polyketiminen, Oxazolidinen oder Polyoxazolidinen;
- Trocknungsmittel, wie beispielsweise Molekularsiebe, Calciumoxid, hochreaktive Isocyanate wie p-Tosylisocyanat, Orthoameisensäureester, Alkoxysilane wie Tetraethoxysilan, Organoalkoxysilane wie Vinyltrimethoxysilan, und Organoalkoxysilane, welche in α-Stellung zur Silangruppe eine funktionelle Gruppe aufweisen;
- Haftvermittler, insbesondere Organoalkoxysilane, im Folgenden "Silane" genannt, wie beispielsweise Epoxysilane, Vinylsilane, (Meth)acrylsilane, Isocyanatosilane, Carbamatosilane, S-(Alkylcarbonyl)-mercaptosilane und Aldiminosilane, oligomere Formen dieser Silane, sowie Addukte von Aminosilanen und/oder Mercaptosilanen mit Polyisocyanaten;
- nicht-reaktive thermoplastische Polymere, wie beispielsweise Homo- oder Copolymere von ungesättigten Monomeren, insbesondere von ungesättigten Monomeren, welche ausgewählt sind aus der Gruppe umfassend Ethylen, Propylen, Butylen, Isobutylen, Isopren, Vinylacetat oder höhere Ester davon, und (Meth)acrylat, wobei Ethylenvinylacetat-Copolymere (EVA), ataktische Poly-a-Olefine (APAO), Polypropylene (PP) und Polyethylene (PE) besonders geeignet sind;
- reaktive thermoplastische Polymere, insbesondere Isocyanatgruppen terminierte Polyurethanpolymere, zu deren Herstellung Polyester-Polyole, vorzugsweise bei Raumtemperatur feste Polyester-Polyole, verwendet werden und die ihren Schmelzpunkt im Bereich der Applikationstemperatur der Zusammensetzung als Warmschmelzklebstoff, bevorzugt zwischen 40 °C und 80 °C, aufweisen;
- Stabilisatoren gegen Wärme, Licht- und UV-Strahlung;
- flammhemmende Substanzen;
- oberflächenaktive Substanzen wie beispielsweise Netzmittel, Verlaufsmittel, Entlüftungsmittel oder Entschäumer;
- Biozide, wie beispielsweise Algizide, Fungizide oder das Pilzwachstum hemmende Substanzen;
sowie weitere, üblicherweise in Polyurethanzusammensetzungen eingesetzte Substanzen.

Weiterhin vorteilhaft enthält die Zusammensetzung mindestens einen Katalysator, welcher die Hydrolyse der Aldimingruppen und/oder die Reaktion der Isocyanatgruppen beschleunigt.

Katalysatoren, welche die Hydrolyse des Dialdimins beschleunigen, sind beispielsweise organische Carbonsäuren, wie Benzoesäure oder Salicylsäure, organische Carbonsäureanhydride, wie Phthalsäureanhydrid oder Hexahydrophthalsäureanhydrid, Silylester organischer Carbonsäuren, organische Sulfonsäuren wie p-Toluolsulfonsäure oder 4-Dodecylbenzolsulfonsäure, Sulfonsäureester, andere organische oder anorganische Säuren, oder Mischungen der vorgenannten Säuren und Säureester.

Katalysatoren, welche die Reaktion der Isocyanatgruppen mit Wasser beschleunigen, sind beispielsweise Organozinnverbindungen wie Dibutylzinndilaurat, Dibutylzinndichlorid, Dibutylzinndiacetylacetonat, Bismut-organische Verbindungen oder Bismut-Komplexe, oder amingruppenhaltige Verbindungen wie beispielsweise 2,2'-Dimorpholinodiethylether oder 1,4-Diazabicyclo[2.2.2]-octan, oder andere, in der Polyurethanchemie übliche, Katalysatoren für die Reaktion der Isocyanatgruppen.

Es kann vorteilhaft sein, wenn in der Polyurethanzusammensetzung eine Mischung aus mehreren Katalysatoren vorhanden ist, insbesondere ein Gemisch aus einer Säure und einer metallorganischen Verbindung oder einem Metallkomplex, aus einer Säure und einer Aminogruppen enthaltenden Verbindung, oder ein Gemisch aus einer Säure, einer metallorganischen Verbindung oder einem Metallkomplex, und einer Aminogruppen enthaltenden Verbindung.

Ein typischer Gehalt an Katalysator beträgt üblicherweise 0.005 bis 2 Gew.-%, bezogen auf die gesamte Zusammensetzung, wobei dem Fachmann klar ist, welche Einsatzmengen für welche Katalysatoren sinnvoll sind.

Es ist vorteilhaft, alle genannten, in der Zusammensetzung gegebenenfalls vorhandenen Bestandteile, insbesondere einen Füllstoff und einen Katalysator, so auszuwählen, dass die Lagerstabilität der Zusammensetzung durch die Anwesenheit eines solchen Bestandteils nicht negativ beeinflusst wird, das heisst, dass sich die Zusammensetzung in ihren Eigenschaften, insbesondere den Applikations- und Aushärtungseigenschaften, bei der Lagerung nicht oder nur wenig verändert. Dies bedingt, dass zur chemischen Aushärtung der beschriebenen Zusammensetzung führende Reaktionen, insbesondere der Isocyanatgruppen, während der Lagerung nicht in signifikantem Ausmass auftreten. Es ist deshalb insbesondere von Vorteil, dass die genannten Bestandteile kein oder höchstens Spuren von Wasser enthalten oder beim Lagern freisetzen. Es kann deshalb sinnvoll sein, gewisse Bestandteile vor dem Einmischen in die Zusammensetzung chemisch oder physikalisch zu trocknen.

Die beschriebene Zusammensetzung wird unter Ausschluss von Feuchtigkeit hergestellt und aufbewahrt. Die Zusammensetzung ist lagerstabil, das heisst, sie kann unter Ausschluss von Feuchtigkeit in einer geeigneten Verpackung oder Anordnung, wie beispielsweise einem Fass, einem Beutel oder einer Kartusche, über einen Zeitraum von mehreren Monaten bis zu einem Jahr und länger aufbewahrt werden, ohne dass sie sich in ihren Anwendungseigenschaften oder in ihren Eigenschaften nach der Aushärtung in einem für ihren Gebrauch relevanten Ausmass verändert. Üblicherweise wird die Lagerstabilität über die Messung der Viskosität oder der Auspresskraft ermittelt.

Wird die Zusammensetzung in Kontakt mit Feuchtigkeit gebracht, beginnt sie, durch chemische Reaktionen der Aldimino- und der Isocyanatgruppen bedingt, auszuhärten und damit ihre Endfestigkeit zu erlangen. Somit betrifft ein weiterer Aspekt der vorliegenden Erfindung eine ausgehärtete Zusammensetzung, welche aus der Reaktion von Wasser, insbesondere in der Form von Luftfeuchtigkeit, mit einer vorhergehend beschriebenen Zusammensetzung erhalten wird. Die Aldiminogruppen des cycloaliphatischen Dialdimins der Formel (I) haben die Eigenschaft, bei Kontakt mit Feuchtigkeit zu hydrolysieren. Die dabei formal entstehenden freien Aminogruppen reagieren mit den in der Zusammensetzung vorhandenen Isocyanatgruppen, wobei Harnstoffgruppen entstehen und Aldehyde der Formel (III) freigesetzt werden.

Bevorzugt sind die Isocyanatgruppen zu den Aldiminogruppen in stöchiometrischem Überschuss. Diese überschüssigen Isocyanatgruppen der Zusammensetzung reagieren direkt mit Feuchtigkeit und bilden unter Abspaltung von Kohlendioxid Harnstoffgruppen. Als Ergebnis dieser und allfälliger weiterer Reaktionen der Isocyanatgruppen härtet die Zusammensetzung aus. Dieser Prozess wird auch als Vernetzung bezeichnet. Das cycloaliphatische Dialdimin der Formel (I) wird bei der Aushärtung unter Freisetzung des zu seiner Herstellung eingesetzten Aldehyds in die ausgehärtete Polyurethan-Matrix eingebaut. Die Reaktion der Isocyanatgruppen mit dem hydrolysierenden Dialdimin muss dabei nicht notwendigerweise über freie Aminogruppen erfolgen. Selbstverständlich sind auch Reaktionen von bei der Hydrolyse auftretenden Zwischenstufen möglich. Beispielsweise ist es denkbar, dass eine hydrolysierende Aldiminogruppe des cycloaliphatischen Dialdimins der Formel (I) in der Form einer Halbaminalgruppe direkt mit einer Isocyanatgruppe reagiert.

Die Zusammensetzung wird insbesondere als einkomponentige Zusammensetzung eingesetzt und ist feuchtigkeitshärtend. Das für die Aushärtung benötigte Wasser kann entweder aus der Luft stammen (Luftfeuchtigkeit), oder aber die vorgängig beschriebene Zusammensetzung kann mit einer Wasser enthaltenden Komponente in Kontakt gebracht werden, zum Beispiel durch Bestreichen, beispielsweise mit einem Abglättmittel, oder durch Besprühen, oder es kann der Zusammensetzung bei der Applikation eine Wasser enthaltende Komponente zugesetzt werden, zum Beispiel in Form einer wasserhaltigen Paste, die, beispielsweise über einen Statikmischer, eingemischt wird. Bei der Aushärtung mittels Luftfeuchtigkeit härtet die Zusammensetzung von aussen nach innen durch. Die Geschwindigkeit der Aushärtung wird dabei von verschiedenen Faktoren, wie beispielsweise der Diffusionsrate des Wassers, der Temperatur, der Umgebungsfeuchte und der Klebegeometrie, bestimmt; sie verlangsamt sich in der Regel mit dem Fortschreiten der Aushärtung.

Werden bei der Aushärtung der Zusammensetzung nur geruchsfreie Aldehyde, wie die vorgängig beschriebenen, freigesetzt, so entsteht durch die Aushärtung der Zusammensetzung kein störender Geruch, was für viele Anwendungen, insbesondere in Innenräumen, ein grosser Vorteil oder sogar eine Voraussetzung ist.

Die beschriebene Zusammensetzung härtet bei Kontakt mit Feuchtigkeit, beziehungsweise Wasser, rasch und ohne die Bildung von Blasen aus. Die ausgehärtete Zusammensetzung ist - auch unter Licht- und Temperatureinfluss - weitgehend vergilbungsfrei. Dies ermöglicht ihre Anwendung in Klebstoffen, Dichtstoffen und Beschichtungen, welche in transparenter Erscheinungsform oder in hellen Farbtönen verwendet werden und dabei farbstabil sein sollen.

Bei der Aushärtung der Zusammensetzung nimmt deren Oberflächenklebrigkeit sehr schnell ab. Dies ist für eine Polyurethanzusammensetzung, welche aus cycloaliphatische Isocyanatgruppen aufweisenden Polyurethanpolymeren, insbesondere solchen auf Basis von IPDI, aufgebaut ist, ungewöhnlich und überraschend. Die Klebrigkeit einer üblichen solchen Zusammensetzung, insbesondere in der Anwendung als elastischer Kleb- oder Dichtstoff, ist oft stark ausgeprägt und nimmt erst einige Tage oder gar Wochen nach der Applikation ab, was die Zusammensetzung anfällig macht auf Verschmutzungen, insbesondere durch Stäube.

Die beschriebene Zusammensetzung verfügt nach ihrer Aushärtung bei gleichbleibend guter Dehnbarkeit über eine bemerkenswert hohe Härte und Festigkeit, was für eine Polyurethanzusammensetzung, welche aus cycloaliphatische Isocyanatgruppen aufweisenden Polyurethanpolymeren, insbesondere solchen auf Basis von IPDI, aufgebaut ist, überraschend ist. Ihre Zugfestigkeit und Shore-Härte sind deutlich höher als jene von vergleichbaren Polyurethanzusammensetzungen, welche auf cycloaliphatische Isocyanatgruppen aufweisenden Polyurethanpolymeren und Dialdiminen ausgehend von nicht-cycloaliphatischen Diaminen aufgebaut sind. Eine derartige Verbesserung von Festigkeit und Härte, die sich aus der Verwendung der cycloaliphatischen Dialdimine der Formel (1) ergibt, konnte aus dem Stand der Technik nicht erwartet werden.

Die beschriebene Zusammensetzung zeigt überdies eine geringe Tendenz, nach ihrer Aushärtung nicht im Polymer eingebundene flüssige Bestandteile, insbesondere die zur Herstellung der cycloaliphatischen Dialdimine der Formel (I) eingesetzten Aldehyde der Formeln (III), (IV) und/oder (V) sowie optional vorhandene Weichmacher, durch Migration auszuschwitzen. Dies ist für den Fachmann überraschend, da bei vergleichbaren Zusammensetzungen nach dem Stand der Technik, welche nicht-cycloaliphatische Dialdimine oder gar keine Dialdimine enthalten, ein deutlich stärkeres Ausschwitzen der migrationsfähigen Bestandteile beobachtet wird. Dies kann insbesondere auch für vergleichbare Zusammensetzungen zutreffen, welche Aldimine enthalten, die auf den gleichen Aldehyden wie die Dialdimine der Formel (1) beruhen, das heisst auf Aldehyden der Formeln (III), (IV) und/oder (V). Es wird vermutet, dass bei der beschriebenen Zusammensetzung die geringere Tendenz zum Ausschwitzen der migrationsfähigen Bestandteile darauf zurückzuführen ist, dass letztere, insbesondere die Aldehyde, wesentlich besser mit der Polymer-Matrix, insbesondere den cycloaliphatischen Harnstoff-Gruppen, verträglich sind.

Das geringere Ausschwitzen von migrationsfähigen Bestandteilen in Kombination mit der raschen Aushärtung der beschriebenen Zusammensetzung verhindert weitgehend, dass die Oberfläche der Zusammensetzung nach deren Applikation über längere Zeit klebrig bleibt und somit Schmutz und Stäube an ihr haften bleiben. Weiterhin treten auf der Oberfläche der Zusammensetzung sowie auf dem Substrat, auf dem die Zusammensetzung appliziert wurde, keine oder weniger Flecken und Verunreinigungen auf als in üblichen Zusammensetzungen nach dem Stand der Technik. Flecken und Verunreinigungen auf Substraten durch migrierende Bestandteile, auch als "Staining" oder "Ausbluten" bezeichnet, treten insbesondere beim Abdichten von Fugen angrenzend an feinporige Materialien, insbesondere Beton, Zemente oder Natursteine, wie Marmor und Granit, auf, da diese Substrate aufgrund ihrer feinen Poren solche migrierenden Bestandteile leicht aufnehmen können. Weiterhin ist das Ausschwitzen von migrationsfähigen Bestandteilen bei Beschichtungen, welche anschliessend versiegelt werden sollen, problematisch, da die Migration von weichmacherartigen Substanzen in die Oberflächenversiegelung hinein oder durch diese hindurch nicht nur das optische Erscheinungsbild der gesamten Beschichtung empfindlich stören, sondern die Versiegelung sogar soweit aufweichen kann, dass diese weitgehend zerstört wird. Weiterhin problematisch ist das Ausschwitzen von migrationsfähigen Bestandteilen bei Verfugungen, bei welchen die Klebefuge anschliessend überstrichen oder überklebt werden soll, da der ausgeschwitzte Film auf der Fuge die Haftung zum Anstrich oder zum Klebstoff beeinträchtigen kann.

Entsprechend der Inhaltsstoffe und deren Mengen weist die Zusammensetzung eine unterschiedliche Konsistenz und unterschiedliche Eigenschaften im nicht ausgehärteten sowie im ausgehärteten Zustand auf. Dieser ist charakteristisch für die jeweilige Anwendung der beschriebenen Zusammensetzung.

Weiterhin umfasst die vorliegende Erfindung die Verwendung einer vorhergehend beschriebenen Zusammensetzung als Klebstoff, Dichtstoff und/oder als Beschichtung für Bau- und Industrieanwendungen.

In einer Ausführungsform weist die Zusammensetzung bei Raumtemperatur eine flüssige Konsistenz mit guten Verlaufeigenschaften auf. Dadurch lässt sie sich einfach als selbstverlaufende Beschichtung auf überwiegend ebene Flächen applizieren, beispielsweise als Bodenbelag. Die Applikation der Zusammensetzung kann in mehreren Schichten erfolgen. Pro Schicht wird üblicherweise eine Schichtdicke von 0.5 bis 3 mm, insbesondere von 0.5 bis 2 mm, appliziert.

In einer anderen Ausführungsform weist die Zusammensetzung bei Raumtemperatur eine pastöse Konsistenz mit strukturviskosen Eigenschaften auf und ist typischerweise geeignet als Kleb- und/oder Dichtstoff, insbesondere als elastischer Kleb- oder Dichtstoff.

In einer speziellen Ausführungsform weist die Zusammensetzung eine bei Raumtemperatur feste Schmelzkomponente, welche vorzugsweise ein wie vorhergehend beschriebenes reaktives oder ein nicht-reaktives thermoplastisches Polymer ist, auf und wird zur besseren Handhabung bevorzugt warm, das heisst bei einer Temperatur oberhalb des Schmelzpunktes der Schmelzkomponente, appliziert. Dadurch erfolgt die Aushärtung durch zwei Vorgänge. Einerseits verfestigt sich die Zusammensetzung beim Abkühlen, indem die Schmelzkomponente, insbesondere das Polyurethanpolymer **P**, erstarrt, insbesondere durch Kristallisation, und sich dadurch die Viskosität der Zusammensetzung stark erhöht. Diese physikalische Aushärtung beendet die Offenzeit ab einem gewissen Zeitpunkt und ergibt die Anfangsfestigkeit der Zusammensetzung. Parallel dazu erfolgt die chemische Aushärtung der Zusammensetzung mittels Feuchtigkeit, wie bereits beschrieben, verbunden mit der Ausbildung der Endfestigkeit.

Bevorzugt wird die Zusammensetzung in der vorgängig beschriebenen Ausführungsform als Klebstoff oder als Dichtstoff eingesetzt, insbesondere als elastischer Kleb- oder Dichtstoff.

Im vollständig ausgehärteten Zustand verfügt die vorgängig beschriebene Zusammensetzung über elastische Eigenschaften bei einer hohen Festigkeit. Das heisst, sie weist einerseits eine hohe Dehnbarkeit, typischerweise von > 300%, und andererseits eine hohe Zugfestigkeit, typischerweise von > 2 MPa, auf.

Weiterhin umfasst die vorliegende Erfindung auch ein Verfahren zur Verklebung eines Substrates **S1** und eines Substrates **S2.** Ein solches Verfahren zur Verklebung umfasst die Schritte
i) Applikation einer Zusammensetzung gemäss vorhergehender Beschreibung auf ein Substrat **S1** und/oder ein Substrat **S2;**
ii) Kontaktieren der Substrate **S1** und **S2** über die applizierte Zusammensetzung; und
iii) Aushärten der applizierten Zusammensetzung mittels Wasser, insbesondere in der Form von Luftfeuchtigkeit;
wobei die Substrate **S1** und **S2** gleich oder verschieden voneinander sind.

Der Klebstoff wird insbesondere in Form von so genannten Dreiecksraupen aufgetragen. Sowohl Kleb- als auch Dichtstoff können aufgrund ihrer Konsistenz, welche ihnen eine gewisse Anfangsfestigkeit verleiht, an Flächen mit beliebiger räumlicher Ausrichtung, also auch an vertikalen und überhängenden Flächen, appliziert werden. Zur besseren Handhabung bei der Applikation weist die Zusammensetzung weiterhin vorzugsweise ein thixotropes Verhalten und einen kurzen Fadenzug auf.

Weiterhin kann die beschriebene Zusammensetzung als Warmschmelzklebstoff eingesetzt werden.

In der Anwendung als Warmschmelzklebstoff wird die Zusammensetzung vor der Applikation auf eine Temperatur über dem Schmelzpunkt des Polyurethanpolymers **P**, bzw. der festen Komponente, insbesondere zwischen 40 °C und 100 °C, aufgeheizt. Die anschliessende Verklebung erfolgt nach dem vorgängig beschriebenen Verfahren.

Weiterhin umfasst die vorliegende Erfindung auch ein Verfahren zur Abdichtung. Ein solches Verfahren umfasst die Schritte
i') Applikation einer Zusammensetzung gemäss vorhergehender Beschreibung zwischen ein Substrat **S1** und ein Substrat **S2;** und
ii') Aushärten der applizierten Zusammensetzung mittels Wasser, insbesondere in der Form von Luftfeuchtigkeit;
wobei die Substrate **S1** und **S2** gleich oder verschieden voneinander sind.

Weiterhin umfasst die vorliegende Erfindung auch ein Verfahren zur Herstellung einer Beschichtung, insbesondere eines Bodenbelages. Ein solches Verfahren umfasst die Schritte
i") Applizieren einer Zusammensetzung gemäss vorhergehender Beschreibung auf ein Substrat **S1,** und
ii") Aushärten der applizierten Zusammensetzung mittels Wasser, insbesondere in der Form von Luftfeuchtigkeit.

Betreffend der Schritte iii), ii') oder ii") der chemischen Aushärtung der Zusammensetzung mit Feuchtigkeit versteht der Fachmann, dass die Aushärtungsreaktion, in Abhängigkeit von Faktoren wie der verwendeten Zusammensetzung, der Substrate, der Temperatur, der Umgebungsfeuchtigkeit und der Klebegeometrie, bereits während der Applikation der Zusammensetzung beginnen kann. Der Hauptteil der chemischen Aushärtung findet im Allgemeinen jedoch nach der Applikation der Zusammensetzung statt.

Als Substrate **S1** und/oder **S2** eignen sich insbesondere Substrate, welche ausgewählt sind aus der Gruppe bestehend aus Beton, Zement, Mörtel, +Backstein, Ziegel, Gips, Naturstein, Asphalt, Metall, Metalllegierung, Holz, Keramik, Glas, Kunststoff, Pulverbeschichtung, Farbe und Lack.

Die Substrate **S1** und/oder **S2** können bei Bedarf vor dem Applizieren der vorgängig beschriebenen Zusammensetzung vorbehandelt werden. Derartige Vorbehandlungen umfassen insbesondere physikalische und/oder chemische Reinigungsverfahren, beispielsweise Schleifen, Sandstrahlen, Bürsten oder dergleichen, oder Behandeln mit Reinigern oder Lösungsmitteln oder eine Beflammung oder eine Plasmabehandlung, insbesondere eine Luftplasma-Vorbehandlung bei atmosphärischem Umgebungsdruck. Weiterhin können die Substrate **S1** und/oder **S2** Vorbehandlungen beispielsweise in Form einer Grundierung aufweisen. Als Grundierungen in Frage kommen beispielsweise Haftvermittlerzusammensetzungen oder Primer.

Besonders geeignet ist die Zusammensetzung für geruchssensible Anwendungen, wie beispielsweise das Abdichten von Fugen im Innern von Gebäuden, das Herstellen von Beschichtungen oder Böden in Innenräumen sowie das Verkleben von Bauteilen im Innenraum von Fahrzeugen. Als Beschichtungen bevorzugt sind Schutzanstriche, Versiegelungen, Schutzbeschichtungen und Primer-Beschichtungen. Unter den Belägen sind besonders Bodenbeläge als bevorzugt zu nennen. Beispielsweise werden solche Bodenbeläge für Büros, Wohnbereiche, Spitäler, Schulen, Lagerhallen, Parkgaragen und andere private oder industrielle Anwendungen verwendet. Diese Anwendungen sind grossflächig, was bei üblichen, dem Stand der Technik entsprechenden, Zusammensetzungen selbst bei Anwendungen im Aussenbereich zu arbeitshygienischen Schwierigkeiten und/oder Geruchsbelästigungen führen kann. Weiterhin wird ein Grossteil der Fussbodenbeläge im Innenbereich appliziert. Deshalb stellt der Geruch bei Bodenbelägen generell ein grosses Problem dar, welches jedoch mit den erfindungsgemässen Zusammensetzungen behoben werden kann.

Der Auftrag der beschriebenen Zusammensetzung zum Verkleben und/oder Abdichten von Substraten **S1** und/oder **S2** erfolgt typischerweise aus handelsüblichen Kartuschen, welche für kleinere Anwendungen bevorzugt manuell betrieben werden. Eine Applikation mittels Druckluft aus einer Kartusche oder aus einem Fass oder Hobbock mittels einer Förderpumpe oder eines Extruders, gegebenenfalls mittels eines Applikations-Roboters, ist ebenfalls möglich. Derartige Applikationsarten werden insbesondere in Anwendungen der industriellen Fertigung oder bei grossen Applikationen bevorzugt.

Der Auftrag der beschriebenen Zusammensetzung zur Herstellung einer Beschichtung erfolgt typischerweise durch Aufgiessen auf das zu beschichtende Substrat **S1,** insbesondere auf einen Boden, und wird im flüssigen Zustand mit Hilfe beispielsweise eines Rakels oder einer Zahntraufel gleichmässig verteilt. Zusätzlich kann das Material mit einer Stachelwalze egalisiert und entlüftet werden. Es ist aber auch eine maschinelle Applikation, beispielsweise in Form einer Spritzapplikation, möglich.

Es ist auch möglich, dass die beschriebene Zusammensetzung vor der Applikation mit einem weiteren Füllstoff, insbesondere Quarzsand, vermischt wird. Ebenso ist es möglich, nur die Oberfläche der noch flüssigen Zusammensetzung mit Quarzsand zu bestreuen, bzw. einzustreuen. Auf beide Arten wird eine sandige, gut rutschfeste, abrasionsbeständige Oberfläche erhalten, welche je nach Bedarf versiegelt werden kann.

Weiterhin kann die Zusammensetzung einschichtig oder mehrschichtig aufgetragen werden. Bei einer mehrschichtigen Applikation wiederholt sich das Verfahren des Auftrags mehrere Male unmittelbar oder in bestimmten zeitlichen Abständen nacheinander.

Schliesslich kann anschliessend an die Applikation der beschriebenen Zusammensetzung eine so genannte Versiegelung aufgetragen werden, welche in einer dünnen Schicht, beispielsweise in einer Dicke von einigen Mikrometern bis einigen Zehntelmillimetern, die Oberflächenbeschaffenheit des Bodenbelages nochmals beeinflusst. Dabei kann es sich um eine transparente oder um eine pigmentierte Versiegelung handeln. Es ist auch möglich, dass auf eine ausgehärtete Schicht einer erfindungsgemässen Zusammensetzung, welche eine hohe Bruchdehnung aufweist, zusätzlich eine so genannte Verschleissschicht aufgetragen wird. Auf diese Weise entsteht ein Belag mit guter dynamischer Rissüberbrückung und hoher Oberflächenhärte, wobei die erfindungsgemässe Zusammensetzung mit ihrer hohen Elastizität die Rissüberbrückung gewährleistet, und die Verschleissschicht die hohe Oberflächenhärte gewährt. Die Verschleissschicht ihrerseits kann je nach Bedarf noch versiegelt werden. Auf diese Weise können Boden-Aufbauten gemäss OS 11 nach der "Richtlinie für Schutz und Instandsetzung von Betonbauteilen" des Deutschen Ausschusses für Stahlbeton erhalten werden, wobei "OS" für "Oberflächenschutzsystem" steht.

Weiterhin umfasst die vorliegende Erfindung einen mit einer beschriebenen Zusammensetzung verklebten, abgedichteten und/oder beschichteten Artikel, welcher durch eines der beschriebenen Verfahren erhalten wird.

Bei diesen Artikeln handelt es sich vorzugsweise um ein Gebäude oder ein Bauwerk des Hoch- oder Tiefbaus, ein industriell gefertigtes Gut oder ein Konsumgut, insbesondere ein Fenster, eine Haushaltsmaschine, oder ein Transportmittel, insbesondere ein Fahrzeug, oder ein Anbauteil eines Fahrzeugs.

Bevorzugt handelt es sich bei diesen Artikeln um Böden, typischerweise im Innen- sowie im Aussenbereich von Gebäuden oder Bauwerken, wie beispielsweise Böden von Büros, Industriehallen, Turnhallen, Kühlhallen, Balkonen, Terrassen, Brücken, Parkdecks oder Sport- und Spielplätze.

### Beispiele

### Beschreibung der Messmethoden

**Infrarotspektren** wurden auf einem FT-IR Gerät 1600 von Perkin-Elmer (horizontale ATR-Messeinheit mit ZnSe-Kristall) gemessen, wobei die Substanzen unverdünnt als Film aufgetragen wurden. Die Absorptionsbanden sind in Wellenzahlen (cm-') angegeben (Messfenster: 4000-650 cm⁻¹).

**¹H-NMR-Spektren** wurden auf einem Spektrometer des Typs Bruker DPX-300 bei 300.13 MHz gemessen; die chemischen Verschiebungen δ sind angegeben in ppm relativ zu Tetramethylsilan (TMS), Kopplungskonstanten *J* sind angegeben in Hz. Echte und Pseudo-Kopplungsmuster wurden nicht unterschieden.

Die **Viskosität** wurde auf einem thermostatisierten Kegel-Platten-Viskosimeter Physica UM (Kegeldurchmesser 20 mm, Kegelwinkel 1°, Kegelspitze-Platten-Abstand 0.05 mm, Schergeschwindigkeit 10 bis 1000 S⁻¹) gemessen.

Der **Amingehalt** der hergestellten Dialdimine, das heisst der Gehalt an blockierten Aminogruppen in Form von Aldiminogruppen, wurde titrimetrisch bestimmt (mit 0.1N HCIO₄ in Eisessig, gegen Kristallviolett) und ist stets angegeben in mmol N/g.

### a) Herstellung von Dialdiminen

### Dialdimin A-1 (entsprechend der Formel (I))

In einem Rundkolben wurden unter Stickstoffatmosphäre 55.0 g (0.19 mol) destilliertes 2,2-Dimethyl-3-lauroyloxy-propanal vorgelegt. Unter kräftigem Rühren wurden aus einem Eintropftrichter 15.6 g (0.18 mol N) 1-Amino-3-aminomethyl-3,5,5-trimethylcyclohexan (= Isophorondiamin, IPDA; Vestamin^{®} IPD, Degussa; Amingehalt 11.68 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 67.1 g eines klaren, farblosen Öls mit einem Amingehalt von 2.73 mmol N/g und einer Viskosität von 190 mPa·s bei 20 °C.
IR: 2952, 2922, 2852, 2819sh, 1738 (C=O), 1666 (C=N), 1464, 1418, 1394, 1378, 1364, 1350, 1298, 1248, 1236sh, 1158, 1112, 1048, 1020, 1000, 938, 928, 910, 894, 868, 772, 722.
¹H-NMR (CDCl₃, 300 K): δ 7.59 und 7.57 (2x*s*, total 1 H, CH=N ([Isomere]), 7.47 (s, 1 H, CH=N), 4.03 und 4.01 (2xs, 2x2 H, C(CH₃)₂-C*H*₂-O), 3.37 (*m*, 1 H, N-CH^{Cy}), 3.08 *(dd,* 2 H, *J ≈* 11.1, N-CH₂-C^{Cy}), 2.30 *(t,* 4 H, *J ≈* 7.5, OC(O)-C*H*₂-CH₂), 1.61 (*m*, 4 H, OC(O)-CH₂-C*H*₂), 1.60-0.85 (m, 65 H, übrige CH).

### Dialdimin A-2 (entsprechend der Formel (I))

In einem Rundkolben wurden unter Stickstoffatmosphäre 50.0 g (0.18 mol) destilliertes 2,2-Dimethyl-3-lauroyloxy-propanal vorgelegt und bei Raumtemperatur mit 17.9 g (0.17 mol N) festem Bis-(4-aminocyclohexyl)-methan (H₁₂MDA; Isomerengemisch; Amingehalt 9.37 mmol N/g) versetzt. Dieses ging nach kurzer Zeit vollständig in Lösung, wobei sich die Mischung erwärmte und zunehmend eintrübte. Danach wurden die flüchtigen Bestandteile im Vakuum entfernt (10 mbar, 80 °C). Ausbeute: 64.7 g eines klaren, braunorangefarbenen Öls mit einem Amingehalt von 2.60 mmol N/g und einer Viskosität von 460 mPa·s bei 20 °C.
IR: 2952sh, 2920, 2851, 2818sh, 1737 (C=O), 1665 (C=N), 1466, 1449, 1418, 1394, 1375, 1345, 1300, 1248, 1233, 1159, 1112, 1056, 1019, 1000, 938, 913, 896, 766, 721.
¹H-NMR (CDCl₃, 300 K): δ 7.55 und 7.53 (2xs, Verhältnis ca. 7/3; 2 H, CH=N), 4.02 und 4.00 (2xs, Verhältnis ca. 3/7; 4 H, C(CH₃)₂-C*H*₂-O), 3.09 und 2.88 (2xm, Verhältnis ca. 3/7; 2 H, N-CH^{Cy}), 2.29 (*t*, 4 H, *J ≈* 7.5, OC(O)-C*H*₂-CH₂), 1.89 und 1.75 (2xm, Verhältnis ca. 3/7; 4 Cy-H), 1.65-1.40 (m, 16 H, 12 Cy-H und OC(O)-CH₂-C*H*₂), 1.35-0.90 (m, 36 H, 4 Cy-H und CH₃-(C*H*₂)₈-CH₂-CH₂-CO), 1.08 (s, 12 H, C(C*H*₃)₂-CH₂-O), 0.88 (*t*, 6 H, *J ≈* 6.9, C*H*₃-(CH₂)₁₀-CO).

### Dialdimin A-3 (entsprechend der Formel (I))

In einem Rundkolben wurden unter Stickstoffatmosphäre 60.5 g (0.21 mol) destilliertes 2,2-Dimethyl-3-lauroyloxy-propanal vorgelegt. Unter kräftigem Rühren wurden aus einem Eintropftrichter 11.6 g (0.20 mol N) 1,2-Diaminocyclohexan (DCH; Dytek^{®} DCH-99, Invista; Amingehalt 17.34 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 68.2 g eines klaren, fast farblosen Öls mit einem Amingehalt von 2.94 mmol N/g und einer Viskosität von 80 mPa·s bei 20 °C.
IR: 2952sh, 2922, 2852, 1738 (C=O), 1666 (C=N), 1466, 1418, 1392, 1374, 1344, 1300, 1246, 1234, 1158, 1112, 1082, 1018, 1000, 932, 858, 846, 830, 802, 766, 722, 676.

### Dialdimin A-4 (entsprechend der Formel (I))

In einem Rundkolben wurden unter Stickstoffatmosphäre 50.0 g (0.18 mol) destilliertes 2,2-Dimethyl-3-lauroyloxy-propanal vorgelegt. Unter kräftigem Rühren wurden aus einem Eintropftrichter 19.8 g (0.17 mol N) Bis-(4-amino-3-methylcyclohexyl)-methan (Laromin^{®} C 260, BASF; Amingehalt 8.46 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 66.5 g eines klaren, farblosen Öls mit einem Amingehalt von 2.50 mmol N/g.
IR: 2952sh, 2920, 2852, 2815sh, 1738 (C=O), 1666 (C=N), 1456, 1418, 1394, 1370, 1344, 1299, 1248, 1234, 1158, 1112, 1046, 1020, 1000, 936, 922, 875, 863, 850, 764, 722.

### Dialdimin A-5 (entsprechend der Formel (I))

In einem Rundkolben wurden unter Stickstoffatmosphäre 80.9 g (0.27 mol) destilliertes 2,2-Dimethyl-3-lauroyloxy-propanal vorgelegt. Unter kräftigem Rühren wurden aus einem Eintropftrichter 25.2 g (0.26 mol N) 3(4),8(9)-Bis-(aminomethyl)-tricyclo[5.2.1.0^{2,6}]decan (TCD-Diamin, Celanese; Amingehalt 10.23 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 100.8 g eines klaren, fast farblosen Öls mit einem Amingehalt von 2.56 mmol N/g.

### Dialdimin A-6 (entsprechend der Formel (I))

In einem Rundkolben wurden unter Stickstoffatmosphäre 45.0 g (0.16 mol) destilliertes 2,2-Dimethyl-3-lauroyloxy-propanal vorgelegt. Unter kräftigem Rühren wurden aus einem beheizten Eintropftrichter 19.2 g (0.15 mol N) 4,4'-Isopropyliden-bis-cyclohexylamin (IPCD; BASF, techn., Isomerengemisch; Amingehalt 7.77 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 61.0 g eines klaren, hellbraunen Öls mit einem Amingehalt von 2.47 mmol N/g.
IR: 2954sh, 2921, 2852, 2822sh, 1737 (C=O), 1666 (C=N), 1466, 1448sh, 1418, 1393sh, 1377sh, 1343, 1300, 1249, 1234, 1159, 1112, 1085, 1058, 1021, 999, 974sh, 937, 898, 871 sh, 761 br, 721, 685.

### Dialdimin A-7 (entsprechend der Formel (I))

In einem Rundkolben wurden unter Stickstoffatmosphäre 25.8 g (0.09 mol) destilliertes 2,2-Dimethyl-3-lauroyloxy-propanal vorgelegt. Unter kräftigem Rühren wurden portionenweise 19.2 g (0.15 mol N) festes *trans*-1,4-Diaminocyclohexan (Invista; Amingehalt 17.25 mmol N/g) zugegeben, die erhaltene Suspension auf 80 °C erwärmt und die flüchtigen Bestandteile im Vakuum entfernt (10 mbar, 80 °C). Ausbeute: 28.7 g eines klaren, blassbraunen Öls mit einem Amingehalt von 2.92 mmol N/g, das beim Stehenlassen innerhalb von einigen Minuten zu einer kristallinen weissen Masse erstarrte. Schmelzpunkt (unkorrigiert): 47-50 °C.
IR: 2953sh, 2922, 2852, 2824sh, 1736 (C=O), 1664 (C=N), 1466, 1454sh, 1418, 1394, 1376, 1364sh, 1346, 1304, 1248, 1232, 1158, 1110, 1086, 1020, 1000, 942, 894, 887sh, 769, 722, 668.

### Dialdimin A-8

In einem Rundkolben wurden unter Stickstoffatmosphäre 50.9 g (0.18 mol) destilliertes 2,2-Dimethyl-3-lauroyloxy-propanal vorgelegt. Unter kräftigem Rühren wurden aus einem beheizten Eintropftrichter 10.0 g (0.17 mol N) 1,6-Hexamethylendiamin (BASF; Amingehalt 17.04 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 57.7 g eines klaren, blassgelben Öls mit einem Amingehalt von 2.94 mmol N/g.

### Dialdimin A-9

In einem Rundkolben wurden unter Stickstoffatmosphäre 74.3 g (0.26 mol) destilliertes 2,2-Dimethyl-3-lauroyloxy-propanal vorgelegt. Unter kräftigem Rühren wurden aus einem Eintropftrichter 30.0 g (0.25 mol N) Polyetherdiamin (Polyoxypropylen-Diamin mit einem mittleren Molekulargewicht von ca. 240 g/mol; Jeffamine^{®} D-230, Huntsman; Amingehalt 8.29 mmol N/g) langsam zugegeben, wobei sich die Mischung erwärmte und zunehmend eintrübte. Danach wurden die flüchtigen Bestandteile im Vakuum entfernt (10 mbar, 80 °C). Ausbeute: 99.5 g eines klaren, blassgelben Öls mit einem Amingehalt von 2.50 mmol N/g.

### b) Herstellung von Polyurethanzusammensetzungen

### Beispiele 1 bis 2 und Vergleichsbeispiel 3: Beschichtungsmassen

Für jedes Beispiel wurden die jeweiligen Bestandteile der Beschichtungsmasse gemäss Tabelle 1 in den angegebenen Gewichtsteilen ohne vorherige Trocknung in einen Polypropylenbecher mit Schraubverschluss eingewogen und mittels eines Zentrifugalmischers (SpeedMixer^{™} DAC 150, FlackTek Inc.; 1 min. bei 2500 U/min) gemischt, die Mischung sofort in eine innenlackierte Aluminiumtube abgefüllt und diese luftdicht verschlossen.

Das Polyurethanpolymer ***P1*** wurde wie folgt hergestellt:

1060 g Polyoxypropylen-Diol (Desmophen^{®} 1111 BD, Bayer; OH-Zahl 111.4 mg KOH/g), 650 g Polyoxypropylen-Diol (Desmophen^{®} 2061 BD, Bayer; OH-Zahl 56.1 mg KOH/g), 770 g Isophorondiisocyanat (Vestanat^{®} IPDI, Degussa) und 0.25 g Dibutylzinndilaurat wurden bei 80 °C zu einem NCO-terminierten Polyurethanpolymeren mit einem Gehalt an freien IsocyanatGruppen von 6.8 Gew.-% umgesetzt.

**Tabelle 1: Zusammensetzung der Beschichtungsmassen der Beispiele 1 bis 2 und des Vergleichsbeispiels 3.**

| Beispiel | **1** | **2** | **3 (Vergleich)** |
|---|---|---|---|
| Polyurethanpolymer ***P1*** | 48.0 | 48.0 | 48.0 |
| IPDI-Trimerisat^{a} | 27.0 | 27.0 | 27.0 |
| Dialdimin | ***A-1,*** | ***A-2,*** | ***A-8,*** |
| | 21.0 | 21.0 | 21.0 |
| Säurekatalysator^{b} | 1.0 | 1.0 | 1.0 |
| Aminkatalysator^{c} | 1.0 | 1.0 | 1.0 |
| Zinnkatalysator^{d} | 0.5 | 0.5 | 0.5 |
| Entschäumer^{e} | 1.5 | 1.5 | 1.5 |

| | | | |
|---|---|---|---|
| ^{a}45 Gew.-% IPDI-Trimerisat (Vestanat^{®} T 1890/100, Degussa; NCO-Gehalt = 17.3 Gew.-%) in Xylol. ^{b} 5 Gew.-% Salicylsäure in Dioctyladipat. ^{c} 2,2'-Dimorpholinodiethylether (DABCO^{®} DMDEE Catalyst, Air Products). ^{d} 10 Gew.-% Dibutylzinn-dilaurat in Diisodecylphthalat. ^{e} BYK-088 (BYK-Chemie/ALTANA). | | | |

Die so erhaltenen Beschichtungsmassen wurden auf Hautbildungszeit, mechanische Eigenschaften im ausgehärteten Zustand und Vergilbung geprüft.

Zur Bestimmung der **Hautbildungszeit** (Zeit bis zur Klebefreiheit, "tack-free time") wurde ein kleiner Teil der während 2 Stunden bei 40 °C gelagerten, raumtemperaturwarmen Beschichtungsmasse in einer Schichtdicke von ca. 2 mm auf Pappkarton aufgetragen und bei 23 °C und 50% relativer Luftfeuchtigkeit die Zeit bestimmt, die es dauerte, bis beim leichten Antippen der Oberfläche der Beschichtungsmasse mittels einer Pipette aus LDPE erstmals keine Rückstände auf der Pipette mehr zurückblieben.

Zur Bestimmung der mechanischen Eigenschaften nach der Aushärtung wurden die Shore A-Härte, die Zugfestigkeit, die Bruchdehnung und das E-Modul gemessen. Die **Shore A-Härte** wurde bestimmt nach DIN 53505 am während 28 Tagen im Normklima (23 °C, 50% relative Luftfeuchtigkeit) ausgehärteten Prüfkörper. Zur Prüfung der weiteren mechanischen Eigenschaften wurde die Beschichtungsmasse 2 Stunden nach der Herstellung in einer planen PTFE-Form zu einem Film von ca. 2 mm Dicke gegossen, der Film während 21 Tagen im Normklima ausgehärtet und nach DIN EN 53504 auf **Zugfestigkeit, Bruchdehnung** und **E-Modul** (Zuggeschwindigkeit: 200 mm/min) geprüft.

Die **Vergilbung** wurde qualitativ geprüft, indem Stücke der vollständig ausgehärteten Beschichtungsmasse während 4 Monaten am Tageslicht, hinter einem sonnenbeschienenen Fenster, aufbewahrt und danach farblich mit Stücken des gleichen Materials, welche im Dunkeln aufbewahrt worden waren, verglichen wurden. Als keine Vergilbung wurde bewertet, wenn bei diesem Vergleich kein signifikanter Unterschied im Farbton festgestellt werden konnte.

In qualitativer Weise beurteilt wurden ausserdem die **Blasenbildung** (anhand der Menge Blasen, die während der Aushärtung des Films auftraten), sowie die **Geruchsbildung** (durch Riechen mit der Nase in einem Abstand von 10 cm am ausgehärteten Film).

Die Ergebnisse dieser Prüfungen sind in Tabelle 2 aufgeführt.

**Tabelle 2: Eigenschaften der Beschichtungsmassen der Beispiele 1 bis 2 und des Vergleichsbeispiels 3.**

| Beispiel | **1** | **2** | **3 (Vergleich)** |
|---|---|---|---|
| Hautbildungszeit (min.) | 195 | 165 | 160 |
| Shore A-Härte | 76 | 88 | 66 |
| Zugfestigkeit (MPa) | 11.7 | 13.5 | 8.8 |
| Bruchdehnung (%) | 350 | 300 | 310 |
| E-Modul (MPa)^{a} | 48 | 67 | 18 |
| Blasenbildung | keine | keine | keine |
| Geruchsbildung | keine | keine | keine |
| Vergilbung | keine | keine | keine |

| | | | |
|---|---|---|---|
| ^{a} bei 0.5-5.0% Dehnung. | | | |

Aus der Tabelle 2 ist ersichtlich, dass die erfindungsgemässen Beschichtungsmassen der Beispiele 1 und 2 gegenüber jener des Vergleichsbeispiels 3 bei mindestens gleich guter Bruchdehnung eine deutlich höhere Zugfestigkeit und ein höheres E-Modul aufweisen.

### Beispiele 4 bis 7 und Vergleichsbeispiele 8 bis 9:

### Elastische Klebstoffe

Für jedes Beispiel wurden die jeweiligen Bestandteile gemäss Tabelle 3 in den angegebenen Gewichtsteilen ohne vorherige Trocknung in einem Vakuummischer unter Feuchtigkeitsausschluss zu einer homogenen Paste verarbeitet, diese unverzüglich in eine innenlackierte Aluminium-Kartusche abgefüllt und die Kartusche luftdicht verschlossen.

Das Polyurethanpolymer ***P2*** wurde wie folgt hergestellt:

590 g Polyol Acclaim^{®} 4200 N (Polypropylenoxid-Diol, OH-Zahl 28.5 mg KOH/g; Bayer), 1180 g Polyol Caradol^{®} MD34-02 (Polypropylenoxidpolyethylenoxid-Triol, OH-Zahl 35.0 mg KOH/g; Shell) und 230 g Isophorondüsocyanat (IPDI; Vestanat^{®} IPDI, Degussa) wurden nach bekanntem Verfahren bei 80 °C zu einem NCO-terminierten Polyurethanpolymeren mit einem titrimetrisch bestimmten Gehalt an freien Isocyanat-Gruppen von 2.1 Gew.-% und einer Viskosität bei 20 °C von 22 Pa.s umgesetzt.

Das Harnstoff-Verdickungsmittel wurde wie folgt hergestellt:

In einem Vakuummischer wurden 3000 g Diisodecylphthalat (DIDP; Palatinol^{®} Z, BASF) und 480 g 4,4'-Methylendiphenyldiisocyanat (MDI; Desmodur^{®} 44 MC L, Bayer) vorgelegt und leicht aufgewärmt. Dann wurden unter starkem Rühren 270 g Monobutylamin langsam zugetropft. Die entstehende Paste wurde unter Vakuum und Kühlung eine Stunde weitergerührt.

**Tabelle 3: Zusammensetzung der elastischen Klebstoffe der Beispiele 4 bis 7 und der Vergleichsbeispiele 8 bis 9.**

| Beispiel | **4** | **5** | **6** | **7** | **8 (Vgl)** | **9 (Vgl)** |
|---|---|---|---|---|---|---|
| Polyurethanpolymer ***P2*** | 35.0 | 35.0 | 35.0 | 35.0 | 35.0 | 35.0 |
| Dialdimin | ***A-1,*** | ***A-2,*** | ***A-3,*** | ***A-4,*** | ***A-9,*** | _ |
| | 4.17 | 4.37 | 3.87 | 4.56 | 4.56 | |
| Vernetzer^{a} | 0.8 | 0.8 | 0.8 | 0.8 | 0.8 | 0.8 |
| Kreide | 27.0 | 27.0 | 27.0 | 27.0 | 27.0 | 27.0 |
| Verdickungsmittel^{b} | 26.83 | 26.63 | 27.13 | 26.44 | 26.44 | 31.50 |
| Titandioxid | 4.5 | 4.5 | 4.5 | 4.5 | 4.5 | 4.5 |
| Epoxysilan^{c} | 0.2 | 0.2 | 0.2 | 0.2 | 0.2 | 0.2 |
| Säurekatalysator^{d} | 1.0 | 1.0 | 1.0 | 1.0 | 1.0 | _ |
| Zinnkatalysator^{e} | 0.5 | 0.5 | 0.5 | 0.5 | 0.5 | 1.0 |

| | | | | | | |
|---|---|---|---|---|---|---|
| ^{a} HDI-Trimerisat (Desmodur^{®} N-3600, Bayer), NCO-Gehalt = 23.0 Gew.-%. ^{b} Harnstoff-Verdickungsmittel. 3-Glycidoxypropyltriethoxysilan (Dynasylan^{®} GLYEO, Degussa). ^{d} Salicylsäure (5 Gew.-% in Dioctyladipat). ^{e} Dibutylzinndilaurat (5 Gew.-% in Düsodecylphthalat). | | | | | | |

Das Verhältnis zwischen den Isocyanatgruppen im Polyurethanpolymer P2 und der Summe der Reaktivgruppen (Aldiminogruppen plus Hydroxylgruppen) in den Dialdiminen der Formel (I) beträgt für alle Beispiele 1.0 / 0.52.

Die so erhaltenen elastischen Klebstoffe wurden auf Standfestigkeit, Fadenzug, Hautbildungszeit, Aushärtungsgeschwindigkeit, mechanische Eigenschaften nach Aushärtung, Klebrigkeit und Staining geprüft.

Zur Bestimmung der **Standfestigkeit** wurde der Klebstoff mittels Kartuschenpistole über eine Dreiecksdüse als waagrecht verlaufende Dreiecksraupe mit einem Basisdurchmesser von 8 mm und einer Höhe (Abstand der Dreiecksspitze von der Basis) von 20 mm auf ein senkrecht stehendes Stück Pappkarton aufgetragen. Nach 5 Minuten wurde gemessen, wie weit sich die Spitze abgesenkt, d.h. von der ursprünglichen Position in der Mitte der Dreiecksraupe wegbewegt, hatte. Als "sehr gut" wurde bewertet, wenn sich die Spitze in vollständig oder annährend unveränderter Position befand, als "gut", wenn die Spitze sich zwischen Mitte und Basisende befand.

Der **Fadenzug** wurde qualitativ bestimmt, indem etwas Klebstoff mittels Kartuschenpistole auf ein an der Wand befestigtes Stück Pappkarton aufgetragen wurde, die Kartuschenpistole beim Auftragsende durch rasches Zurückziehen vom aufgetragenen Klebstoff weggezogen und die Länge des dabei an der Abrissstelle zurückbleibenden Klebstoff-Fadens gemessen wurde.

Die Hautbildungszeit wurde wie bei Beispiel 1 beschrieben bestimmt.

Die **Aushärtungsgeschwindigkeit** (Durchhärtung) wurde bestimmt, indem der Klebstoff mittels Kartuschenpistole durch eine Rundspitze (Öffnung 10 mm) als waagrechter, frei hängender Konus mit einer Länge von ca. 50 mm und einer Dicke in der Mitte von 30 mm auf ein an der Wand befestigtes Stück Pappkarton aufgetragen wurde, während 7 Tagen im Normklima belassen, dann vertikal mittig aufgeschnitten und die Dicke der ausgehärteten KlebstoffSchicht mit einem Massstab gemessen wurde.

Zur Bestimmung der mechanischen Eigenschaften nach derAushärtung wurden Shore A-Härte, Zugfestigkeit, Bruchdehnung und E-Modul gemessen. Die **Shore A-Härte** wurde bestimmt nach DIN 53505 am während 14 Tagen im Normklima ausgehärteten Prüfkörper. Zur Prüfung der weiteren mechanischen Eigenschaften wurde der Klebstoff 2 Stunden nach der Herstellung mittels einer Presse zu einem Film von ca. 2 mm Dicke gepresst, der Film während 14 Tagen im Normklima ausgehärtet und nach DIN EN 53504 auf **Zugfestigkeit**, **Bruchdehnung** und **E-Modul** (Zuggeschwindigkeit: 200 mm/min) geprüft.

Die Prüfung der **Klebrigkeit** der Klebstoffoberfläche erfolgte dadurch, dass man mit dem Daumen auf den aushärtenden Shore A-Prüfkörper, einen Tag nach dessen Applikation, drückte und danach feststellte, wie lange der Prüfkörper beim Anheben der Hand am Daumen kleben blieb. Die Klebrigkeit wurde darauf als hoch (Prüfkörper bleibt mehr als 3 Sekunden lang kleben), mittel (Prüfkörper bleibt etwa 3 Sekunden lang kleben), gering (Prüfkörper bleibt 1 bis 2 Sekunden lang kleben) und keine (Prüfkörper bleibt weniger als 1 Sekunde lang kleben) bewertet.

Das **Staining** wurde anhand der Grösse (gross/mittel/gering/kein) des Fettrings beurteilt, der sich eine Woche nach der Applikation des Shore A-Prüfkörpers auf dem Blatt Papier gebildet hatte, auf welchem der Prüfkörper aufgebracht worden war.

Die Ergebnisse der Prüfungen sind in der Tabelle 4 aufgeführt.

**Tabelle 4: Eigenschaften der elastischen Klebstoffe der Beispiele 4 bis 7 und der Vergleichsbeispiele 8 bis 9.**

| Beispiel | **4** | **5** | **6** | **7** | **8 (Vgl)** | **9 (Vgl)** |
|---|---|---|---|---|---|---|
| Standfestigkeit | s. gut | s. gut | s. gut | s. gut | s. gut | s. gut |
| Fadenzug (cm) | 3 | 5 | 3 | 3 | 3 | 3.5 |
| Hautbildungszeit (min.) | 190 | 90 | 125 | 320 | 135 | >480 |
| Durchhärtung (mm) | 8 | 9 | 7 | 6 | 8 | 9 |
| Shore A-Härte | 43 | 53 | 46 | 51 | 33 | 45 |
| Zugfestigkeit (MPa) | 2.2 | 2.3 | 2.6 | 3.0 | 2.1 | n.m.^{b} |
| Bruchdehnung (%) | 640 | 500 | 760 | 700 | 680 | n.m.^{b} |
| E-Modul (MPa)^{a} | 3.0 | 6.1 | 4.9 | 7.2 | 2.6 | n.m.^{b} |
| Klebrigkeit | keine | keine | keine | keine | hoch | hoch |
| Staining | gering | kein | kein | kein | mittel | gross |

| | | | | | | |
|---|---|---|---|---|---|---|
| ^{a} bei 0.5-5.0% Dehnung. ^{b} nicht messbar wegen starker Blasenbildung. | | | | | | |

Aus der Tabelle 4 ist ersichtlich, dass die erfindungsgemässen elastischen Klebstoffe der Beispiele 4 bis 7, welche jeweils ein cycloaliphatisches primäres Dialdimin der Formel (1) enthalten, gegenüber dem Klebstoff des Vergleichsbeispiels 8, welcher ein nicht-cycloaliphatisches Dialdimin enthält, bei im übrigen ähnlichen Eigenschaften eine deutlich höhere Shore A-Härte und ein höheres E-Modul aufweisen, nach einem Tag weniger klebrig sind und weniger Staining zeigen. Gegenüber dem Klebstoff des Vergleichsbeispiels 9, welcher überhaupt kein Dialdimin enthält, zeichnen sich die erfindungsgemässen elastischen Klebstoffe der Beispiele 4 bis 7 über eine kürzere Hautbildungszeit, eine blasenfreie Aushärtung, bessere mechanische Eigenschaften, eine geringere Klebrigkeit und weniger Staining aus.

### Beispiele 10 bis 11 und Vergleichsbeispiel 12:

### Elastische Dichtstoffe

Für jedes Beispiel wurden die jeweiligen Bestandteile gemäss Tabelle 5 in den angegebenen Gewichtsteilen ohne vorherige Trocknung in einem Vakuummischer unter Feuchtigkeitsausschluss zu einer homogenen Paste verarbeitet, diese unverzüglich in eine innenlackierte Aluminium-Kartusche abgefüllt und die Kartusche luftdicht verschlossen.

Das Polyurethanpolymer ***P3*** wurde wie folgt hergestellt:

580 g Polyol Acclaim^{®} 4200 N (Polypropylenoxid-Diol, OH-Zahl 28.5 mg KOH/g; Bayer), 303 g Polyol Caradol^{®} MD34-02 (Polypropylenoxidpolyethylenoxid-Triol, OH-Zahl 35.0 mg KOH/g; Shell) und 117 g Isophorondiisocyanat (IPDI; Vestanat^{®} IPDI, Degussa) wurden nach bekanntem Verfahren bei 80 °C zu einem NCO-terminierten Polyurethanpolymeren mit einem titrimetrisch bestimmten Gehalt an freien Isocyanat-Gruppen von 2.25 Gew.-% und einer Viskosität bei 20 °C von 10 Pa.s umgesetzt.

Das Harnstoff-Verdickungsmittel wurde wie bei Beispiel 4 beschrieben hergestellt.

Das Verhältnis zwischen den Isocyanatgruppen im Polyurethanpolymer ***P3*** und der Summe der Reaktivgruppen (Aldiminogruppen plus Hydroxylgruppen) in den Dialdiminen der Formel (I) beträgt für alle Beispiele 1.0 / 0.67.

**Tabelle 5: Zusammensetzung der elastischen Dichtstoffe der Beispiele 10 bis 11 und des Vergleichsbeispiels 12.**

| Beispiel | **10** | **11** | **12 (Vergleich)** |
|---|---|---|---|
| Polyurethanpolymer ***P3*** | 24.0 | 24.0 | 24.0 |
| Dialdimin | ***A-1,*** | ***A-5,*** | ***A-9,*** |
| | 3.24 | 3.44 | 3.54 |
| Weichmacher^{a} | 1.76 | 1.56 | 1.46 |
| Kreide | 38.0 | 38.0 | 38.0 |
| Verdickungsmittel^{b} | 28.0 | 28.0 | 28.0 |
| Titandioxid | 4.5 | 4.5 | 4.5 |
| Epoxysilan^{c} | 0.2 | 0.2 | 0.2 |
| Säurekatalysator^{d} | 0.3 | 0.3 | 0.3 |

| | | | |
|---|---|---|---|
| ^{a} Diisodecylphthalat (DIDP; Palatinol^{®} Z, BASF).^{b} Harnstoff-Verdickungsmittel. 3-Glycidoxypropyltriethoxysilan (Dynasylan^{®} GLYEO, Degussa). ^{d} Salicylsäure (5 Gew.-% in Dioctyladipat). | | | |

Die so erhaltenen elastischen Dichtstoffe wurden auf Standfestigkeit, Fadenzug, Hautbildungszeit, Aushärtungsgeschwindigkeit, mechanische Eigenschaften nach Aushärtung, Klebrigkeit und Staining geprüft.

Die Bestimmung der mechanischen Eigenschaften erfolgte wie bei Beispiel 4 beschrieben, ausser dass anstatt dem E-Modul die **Dehnspannung bei 100% Dehnung** bestimmt wurde.

Die übrigen Prüfungen erfolgten wie bei Beispiel 4 beschrieben, wobei die Prüfung der **Klebrigkeit** zusätzlich am drei Tage alten Shore A-Prüfkörper durchgeführt wurde.

Alle Dichtstoffe härteten vollständig blasenfrei aus.

Die Ergebnisse der Prüfungen sind in der Tabelle 6 aufgeführt.

**Tabelle 6: Eigenschaften der elastischen Dichtstoffe der Beispiele 10 bis 11 und des Vergleichsbeispiels 12.**

| Beispiel | **10** | **11** | **12 (Vergleich)** |
|---|---|---|---|
| Standfestigkeit | gut | gut | gut |
| Fadenzug (cm) | 6 | 6 | 4 |
| Hautbildungszeit (min.) | 330 | 220 | 180 |
| Durchhärtung (mm) | 7 | 8 | 4 |
| Shore A-Härte | 27 | 18 | 11 1 |
| Zugfestigkeit (MPa) | 2.1 | 1.0 | n.m.^{a} |
| Bruchdehnung (%) | 1140 | 1200 | n.m.^{a} |
| Dehnspannung bei 100% Dehnung (MPa) | 0.77 | 0.52 | n.m.^{a} |
| Klebrigkeit nach 1 Tag | gering | gering | hoch |
| Klebrigkeit nach 3 Tagen | gering | gering | hoch |
| Staining | gering | gering | gering |

| | | | |
|---|---|---|---|
| ^{a} nicht messbar (zu weich, klebrig). | | | |

Aus der Tabelle 6 ist ersichtlich, dass die erfindungsgemässen elastischen Dichtstoffe der Beispiele 10 bis 11, welche jeweils ein cycloaliphatisches Dialdimin der Formel (I) enthalten, gegenüber dem Dichtstoff des Vergleichsbeispiels 12, welcher ein nicht-cycloaliphatisches Dialdimin enthält, bessere mechanische Eigenschaften und eine deutlich geringere Klebrigkeit nach einem bzw. 3 Tagen aufweisen. Der Dichtstoff des Beispiels 10, welcher ein cycloaliphatisches Dialdimin der Formel (I), in welchem eine der Aldiminogruppen direkt an einen cycloaliphatischen Ring gebunden ist, enthält, zeichnet sich in den mechanischen Eigenschaften, insbesondere der Zugfestigkeit, gegenüber dem Dichtstoff des Beispiels 11, welcher ein cycloaliphatisches Dialdimin der Formel (I) enthält, in welchem keine der Aldiminogruppen direkt an einen cycloaliphatischen Ring gebunden ist, aus.

## Patentansprüche

1. Zusammensetzung umfassend
mindestens ein Polyurethanpolymer **P,** welches cycloaliphatische Isocyanatgruppen aufweist;
und mindestens ein cycloaliphatisches Dialdimin der Formel (I) 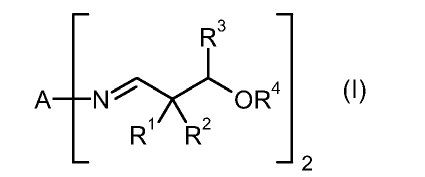 wobei R¹ und R²
unabhängig voneinander jeweils für einen einwertigen Kohlenwasserstoffrest mit 1 bis 12 C-Atomen stehen;
oder zusammen für einen zweiwertigen Kohlenwasserstoffrest mit 4 bis 20 C-Atomen stehen, welcher Teil eines, gegebenenfalls substituierten, carbocyclischen Rings mit 5 bis 8, bevorzugt mit 6, C-Atomen ist;
R³ für ein Wasserstoffatom oder für eine Alkyl- oder Arylalkylgruppe steht;
R⁴
für einen, gegebenenfalls Heteroatome enthaltenden, Kohlenwasserstoffrest mit 6 bis 30 C-Atomen steht;
oder für einen Rest der Formel (II) steht, 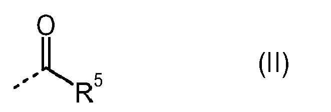 wobei R⁵
für einen linearen oder verzweigten Alkylrest mit 6 bis 30 C-Atomen, gegebenenfalls mit cyclischen Anteilen und gegebenenfalls mit mindestens einem Heteroatom, insbesondere Sauerstoff in Form von Ether-, Ester-, oder Aldehydgruppen, steht;
oder für einen einfach oder mehrfach ungesättigten linearen oder verzweigten Kohlenwasserstoffrest mit 6 bis 30 C-Atomen steht;
oder für einen, gegebenenfalls substituierten, aromatischen oder heteroaromatischen 5- oder 6-gliedrigen Ring steht;
und A für den Rest eines cycloaliphatischen primären Diamins nach Entfernung der beiden primären Aminogruppen steht, wobei dieser Rest keine Gruppierungen aufweist, welche mit Isocyanatgruppen reaktionsfähig sind.

2. Zusammensetzung gemäss Anspruch 1, **dadurch gekennzeichnet, dass** A keine Hydroxylgruppen, keine primären oder sekundären Aminogruppen, keine Mercaptogruppen, keine Harnstoffgruppen und keine anderen Gruppen mit aktivem Wasserstoff aufweist.

3. Zusammensetzung gemäss einem der Ansprüche 1 und 2, **dadurch gekennzeichnet, dass** das Polyurethanpolymer **P** hergestellt wird aus mindestens einem Polyol und mindestens einem cycloaliphatischen Diisocyanat.

4. Zusammensetzung gemäss Anspruch 3, **dadurch gekennzeichnet, dass** das Polyol ein Polyesterpolyol oder ein Polyetherpolyol, insbesondere ein Polyoxyethylenpolyol, ein Polyoxypropylenpolyol oder ein Polyoxypropylenpolyoxyethylenpolyol, ist.

5. Zusammensetzung gemäss einem der Ansprüche 3 und 4, **dadurch gekennzeichnet, dass** das cycloaliphatische Diisocyanat ausgewählt ist aus der Gruppe bestehend aus Cyclohexan-1,3-diisocyanat, Cyclohexan-1,4-düsocyanat, 1-Isocyanato-3,3,5-trimethyl-5-isocyanatomethyl-cyclohexan (IPDI), Perhydro-2,4'-diphenylmethandiisocyanat, Perhydro-4,4'-diphenylmethandüsocyanat, 1,4-Diisocyanato-2,2,6-trimethylcyclohexan, 2-Methyl-1,3-düsocyanatocyclohexan und 4-Methyl-1,3-düsocyanato-cyclohexan, insbesondere lPDl, Perhydro-2,4'-diphenylmethandiisocyanat und Perhydro-4,4'-diphenyimethandiisocyanat, bevorzugt IPDI.

6. Zusammensetzung gemäss einem der vorhergehenden Ansprüche, **dadurch gekennzeichnet, dass** R¹ und R² für Methylgruppen stehen.

7. Zusammensetzung gemäss einem der vorhergehenden Ansprüche, **dadurch gekennzeichnet, dass** R³ für ein Wasserstoffatom steht.

8. Zusammensetzung gemäss einem der vorhergehenden Ansprüche, **dadurch gekennzeichnet, dass** R⁴ für einen Rest der Formel (II) steht, wobei R⁵ für eine Alkylgruppe mit 11 bis 30 C-Atomen, insbesondere mit 11 C-Atomen, steht.

9. Zusammensetzung gemäss einem der vorhergehenden Ansprüche,
**dadurch gekennzeichnet, dass**
R¹ und R² für Methylgruppen stehen;
R³ für ein Wasserstoffatom steht;
und R⁴ für einen Rest der Formel (11) steht, wobei R⁵ für eine Alkylgruppe mit 11 bis 30 C-Atomen, insbesondere mit 11 C-Atomen, steht.

10. Zusammensetzung gemäss einem der vorhergehenden Ansprüche, **dadurch gekennzeichnet, dass** das cycloaliphatische Dialdimin hergestellt wird durch eine Kondensationsreaktion zwischen mindestens einem cycloaliphatischen primären Diamin der Formel H₂N-A-NH₂ und mindestens einem Aldehyd der Formel (III).

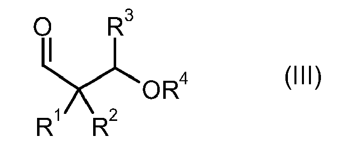

11. Zusammensetzung gemäss Anspruch 10, **dadurch gekennzeichnet, dass** das cycloaliphatische primäre Diamin ausgewählt ist aus der Gruppe bestehend aus 1,2-Diaminocyclohexan (DCH), 1,3-Diaminocyclohexan, 1,4-Diaminocyclohexan, Bis-(4-aminocyclohexyl)-methan (H₁₂MDA), Bis-(4-amino-3-methylcyclohexyl)-methan, Bis-(4-amino-3-ethylcyclohexyl)-methan, Bis-(4-amino-3,5-dimethylcyclohexyl)-methan, 1-Amino-3-aminomethyl-3,5,5-trimethylcyclohexan (IPDA), 2,2'-, 2,4'- und 4,4'-Diaminobicyclohexyl, 2- und 4-Methyl-1,3-diaminocyclohexan und 1,4-Diamino-2,2,6-trimethylcyclohexan, insbesondere DCH, 1,3-Diaminocyclohexan, 1,4-Diaminocyclohexan, IPDA, H₁₂MDA und Bis-(4-amino-3-methylcyclohexyl)-methan, bevorzugt IPDA und H₁₂MDA.

12. Zusammensetzung gemäss einem der vorhergehenden Ansprüche, **dadurch gekennzeichnet, dass** der Anteil des Polyurethanpolymers P 10 bis 95 Gew.-%, insbesondere 15 bis 80 Gew.-%, bezogen auf die gesamte Zusammensetzung, beträgt.

13. Zusammensetzung gemäss einem der vorhergehenden Ansprüche, **dadurch gekennzeichnet, dass** das Verhältnis zwischen den Aldiminogruppen des Dialdimins der Formel (I) und den Isocyanatgruppen des Polyurethanpolymers P einen Wert von 0.1 bis 1.1, insbesondere 0.15 bis 1.0, bevorzugt 0.2 bis 0.9, aufweist.

14. Zusammensetzung gemäss einem der vorhergehenden Ansprüche, **dadurch gekennzeichnet, dass** die Zusammensetzung mindestens einen Füllstoff, insbesondere in der Menge von 10 bis 70 Gew.-%, bevorzugt 20 bis 60 Gew.-%, bezogen auf die gesamte Zusammensetzung, enthält.

15. Zusammensetzung gemäss Anspruch 14, **dadurch gekennzeichnet, dass** der Füllstoff Russ, insbesondere industriell hergestellter Russ (Carbon Black), ist.

16. Zusammensetzung gemäss Anspruch 14, **dadurch gekennzeichnet, dass** der Füllstoff Bariumsulfat (Baryt), Quarzmehl oder ein Calciumcarbonat ist.

17. Zusammensetzung gemäss Anspruch 14, **dadurch gekennzeichnet, dass** der Füllstoff ein flammhemmender Füllstoff, insbesondere ein Hydroxid oder ein Hydrat, bevorzugt ein Hydroxid oder ein Hydrat von Aluminium, besonders bevorzugt Aluminiumhydroxid, ist.

18. Zusammensetzung gemäss einem der vorhergehenden Ansprüche, **dadurch gekennzeichnet, dass** die Zusammensetzung bei Raumtemperatur selbstverlaufend ist.

19. Ausgehärtete Zusammensetzung erhalten aus der Reaktion von Wasser, insbesondere in der Form von Luftfeuchtigkeit, mit einer Zusammensetzung gemäss einem der Ansprüche 1 bis 18.

20. Verwendung einer Zusammensetzung gemäss einem der Ansprüche 1 bis 18 als Klebstoff, Dichtstoff und/oder Beschichtung für Bau- und Industrieanwendungen.

21. Verfahren der Verklebung von Substraten **S1** und **S2** umfassend die Schritte
i) Applikation einer Zusammensetzung gemäss einem der Ansprüche 1 bis 18 auf ein Substrat **S1** und/oder ein Substrat **S2**;
ii) Kontaktieren der Substrate **S1** und **S2** über die applizierte Zusammensetzung; und
iii) Aushärten der applizierten Zusammensetzung mittels Wasser, insbesondere in der Form von Luftfeuchtigkeit;
wobei die Substrate S1 und S2 gleich oder verschieden voneinander sind.

22. Verfahren des Abdichtens umfassend die Schritte
i') Applikation einer Zusammensetzung gemäss einem der Ansprüche 1 bis 18 zwischen ein Substrat **S1** und ein Substrat **S2**; und
ii') Aushärten der applizierten Zusammensetzung mittels Wasser, insbesondere in der Form von Luftfeuchtigkeit;
wobei die Substrate **S1** und **S2** gleich oder verschieden voneinander sind.

23. Verfahren zur Herstellung einer Beschichtung, insbesondere eines Bodenbelages, umfassend die Schritte
i") Applizieren einer Zusammensetzung gemäss einem der Ansprüche 1 bis 18 auf ein Substrat **S1**, und
ii") Aushärten der applizierten Zusammensetzung mittels Wasser, insbesondere in der Form von Luftfeuchtigkeit.

24. Verfahren gemäss einem der Ansprüche 21 bis 23, **dadurch gekennzeichnet, dass** das Substrat **S1** und/oder **S2** ausgewählt ist aus der Gruppe bestehend aus Beton, Zement, Mörtel, Backstein, Ziegel, Gips, Naturstein, Asphalt, Metall, Metalllegierung, Holz, Keramik, Glas, Kunststoff, Pulverbeschichtung, Farbe und Lack.

25. Verfahren gemäss einem der Ansprüche 21 bis 24, **dadurch gekennzeichnet, dass** das Substrat **S1** und/oder **S2** eine Grundierung aufweist.

26. Verfahren gemäss einem der Ansprüche 23 bis 25, **dadurch gekennzeichnet, dass** der Schritt i") des Applizierens einer Zusammensetzung nach einem der Ansprüche 1 bis 18 mehrere Male nacheinander erfolgt.

27. Verfahren gemäss einem der Ansprüche 23 bis 26, **dadurch gekennzeichnet, dass** es zusätzlich einen Schritt des Aufbringens einer Versiegelung umfasst, welcher nach dem letzten Schritt i") des Applizierens der Zusammensetzung erfolgt.

28. Artikel, welcher nach einem Verfahren gemäss einem der Ansprüche 21 bis 27 verklebt, abgedichtet oder beschichtet wurde.

29. Artikel gemäss Anspruch 28, **dadurch gekennzeichnet, dass** der Artikel ein Gebäude oder ein Bauwerk des Hoch- oder Tiefbaus, ein industriell gefertigtes Gut oder ein Konsumgut, insbesondere ein Fenster, eine Haushaltsmaschine oder ein Transportmittel, insbesondere ein Fahrzeug, oder ein Anbauteil eines Fahrzeugs, ist.

30. Artikel gemäss Anspruch 28, **dadurch gekennzeichnet, dass** der Artikel ein Boden, insbesondere ein Boden im Innenbereich von Gebäuden oder Bauwerken, ist.
